(19) Europäisches Patentamt
European Patent Office
Office européen des brevets

(11) Veröffentlichungsnummer: **0 150 812**
**A2**

(12) # EUROPÄISCHE PATENTANMELDUNG

(21) Anmeldenummer: **85100698.1**

(22) Anmeldetag: **24.01.85**

(51) Int. Cl.4: **B 64 C 27/18**

(30) Priorität: **26.01.84 US 573599**

(43) Veröffentlichungstag der Anmeldung: **07.08.85 Patentblatt 85/32**

(84) Benannte Vertragsstaaten: **AT BE CH DE FR GB IT LI LU NL SE**

(71) Anmelder: **Donath, Uwe Heiko, Friedrich-Rüder-Strasse 1, D-2900 Oldenburg (DE)**

(72) Erfinder: **Magill, Gilbert W., Odessa Texas (US)**

(74) Vertreter: **Jabbusch, Wolfgang, Dr., Elisabethstrasse 6, D-2900 Oldenburg (DE)**

(54) **Drehflügelflugzeug.**

(57) Einmann-Hubschrauber mit einem Rumpf und einem daran befestigten, jedoch dagegen versetzten Rotor, Rotorblättern mit Gasstrahltriebwerken an deren Enden, einer Nabe auf der Welle und Mitteln an der Nabe zwischen den Rotorblättern und der Rotorwelle zum Verstellen des Anblasewinkels (der vertikalen Verdrängung) der Rotorblätter, wobei die genannten Mittel umfassen ein um ein Gelenk schwenkbar gelagertes Gehäuse, dessen äusserer Teil eine Taumelscheibe ist, die sich um die Rotorwelle drehen kann und mit den Rotorblättern über Gestänge verbunden ist. Ein von einem Pilot betätigter Griff bewegt ein Joch und eine Kippstange zum Drehen des Taumelscheibenlagers um ein Kardangelenk oder zum senkrechten Bewegen der Taumelscheibe auf der Welle, welche Betätigungen über die Gestänge erfolgen entweder zum Kippen der Rotorblätterebene oder zum Verstellen der einzelnen Blattanstellwinkel, wodurch sich entweder eine Vorwärts- oder Rückwärtsbewegung des Flugzeugs oder ein Steigflug oder Senkflug je nach Vor- oder Zurückbewegen des Steuergriffs oder dessen Vertikalbewegung ergibt. Am Steuergriff ist eine Drossel angebracht, die über einen Regler wirkt und die Treibstoffzufuhr zu den Gasstrahltriebwerken beeinflusst. Ein abnehmbarer Druckschraubenmotor findet Verwendung, um diesem Flugzeug Vielseitigkeit und zusätzliche Kraft für längere Flüge zu verleihen. Ein Trimm-Verstellmittel sorgt für die Ausrichtung der Rotor-Hubachse und des Flugzeugschwerpunktes. Als Fahrgestell kann der Pilot seine Beine benutzen, doch können auch abnehmbare Kufen bereitgestellt werden. Treibstoffbehälter, Pilotensitz und Geschirr sowie ein Heckrotor für Richtungssteuerung sind vorhanden. Die gesamte Konstruktion schafft ein vielseitiges Flugzeug, das von durchschnittlichen Personen leicht geflogen werden kann.

EP 0 150 812 A2

0150812

# DREHFLÜGELFLUGZEUG

## VORGESCHICHTE DER ERFINDUNG

1. Gebiet der Erfindung

Die Erfindung bezieht sich auf Drehflügler mit Reaktionsrotor und insbesondere auf einen Einmann-Hubschrauber, der äußerst leicht und einfach in seiner Bauweise ist und der vom Piloten durch Verwendung eines einzigen Steuergriffs betrieben wird.

2. Bekannter Stand der Technik

Zu den ganz allgemein sich auf dieses Erfindungsgebiet beziehenden Patenten gehören die folgenden US-Patente:

| Patentinhaber | US-Patent-Nr. | Tag der Erteilung |
|---|---|---|
| Gilbert W. Magill | 4.071.206 | 31. Januar 1978 |
| Peter R. Payne | 3.586.263 | 22. Juni 1971 |
| B. I. Faller | 3.220.670 | 30. November 1965 |
| D. J. Halsey | 3.042.347 | 3. Juli 1962 |
| E. H. Jacobsen u.a. | 3.029.047 | 10. April 1962 |
| I. B. Bensen | 2.905.410 | 22. September 1959 |
| M. J. Carrau | 2.763.447 | 18. September 1956 |
| B. Nagler | 2.745.498 | 15. Mai 1956 |
| P. H. Stanley | 2.601.463 | 24. Juni 1952 |

Auch die folgenden Patente sind dem Anmelder bekannt:

| Land | Patent-Nr. | Datum |
|---|---|---|
| Frankreich | 524.799 | September 1921 |
| England | 686.608 | Januar 1953 |



BAD ORIGINAL

Darüber hinaus sind die folgenden gedruckten Veröffentlichungen bezüglich der in US-Patent Nr. 4.071.206 beschriebenen Art in Umlauf gebracht worden, welches Patent der Öffentlichkeit gewidmet worden ist: "Astronaut's visit mini-copter plant" (Kleinsthubschrauber für Astronautenbesuche) ohne Datumsangabe. "Aviation Week and Space Technology" (Luftfahrtwoche und Raumtechnik) vom 10. September 1973 erörtert ein Flugtestprogramm für einen Miniatur-Drehflügler mit Reaktionsrotor. Diese Veröffentlichung beschreibt in allgemeinen Ausführungen den Treibstoff für das Flugzeug, dessen Bereich, einen Druckschraubenmotor für das Flugzeug und die Kosten für derartiges Gerät. "Mechanical Engineering" (Maschinenbau) aus Oktober 1973, worin ein sogenannter "hot-rod MINI-COPTER" erörtert ist. Diese Veröffentlichung bezieht sich ebenfalls auf das Testen eines Drehflüglers im allgemeinen, einschließlich Verwendung eines Benzinmotors mit einer Leistung von 90 HP, verwendetem Treibstoff zum Antrieb der Rotorblätter sowie mit Gewicht und Kosten eines derartigen Flugzeugs. "Science and Mechanics" (Wissenschaft und Mechanik) aus Dezember 1973 beschreibt in allgemeiner Ausführung einen Drehflügler, der an den Enden der Rotorblätter Gasstrahlantriebe besitzt, sowie Kenndaten seiner Zusammenlegbarkeit. Diese Veröffentlichung beschreibt ganz allgemein den Treibstoff zum Antrieb der Rotorblätter, die Steig- und Sinkgeschwindigkeit eines derartigen Flugzeugs mit der genannten Antriebskraft, seine Anschnall- und Zusammenlegbarkeitsmerkmale wie auch das Konzept einer Steuerung eines derartigen Hubschraubers mit einem von jeder beliebigen Hand zu betätigenden Einzelgriff. Zu beachten ist, daß diese Merkmale ihrem Wesen nach recht allgemein gehalten sind und keinerlei spezifische Einzelheiten des mechanischen Aufbaus, des Triebwerks oder Besonderheiten der Steuerung des



BAD ORIGINAL

0150812

Flugzeugs beschreiben. Eine Veröffentlichung mit dem Titel "1948 Rotary Wing Pictorial Review" (Drehflügler-übersicht 1948 im Bild) aus Dezember 1948 zeigt auf Seite 14 einen "HOPPICOPTER", bei dem die Hauptrotoren durch einen Benzinmotor angetrieben werden. Auch der Hubschrauber mit der Bezeichnung LITTLE HENRY RAM-JET, der dort auf Seite 16 gezeigt wird, ist für die Aufnahme eines einzelnen Piloten konstruiert. Ein an Personal der Streitkräfte ausgegebenes Rundschreiben mit dem Titel "DAS REVOLUTIONIERENSTE FLUGZEUG, DAS JE AUFSTEIGEN SOLLTE" beschreibt in allgemeinen Begriffen einen Einmann-Hubschrauber mit Gasstrahlantrieben an den Blattenden, Einzelgriff-Steuerungsmitteln und Konvertibilitätsmitteln. Dieses Rundschreiben enthält Einsätze mit dem Titel "MINICOPTER-EINSÄTZE", die einen Einmann-Hubschrauber für viele Einsatzmöglichkeiten zeigen und allgemeine Beschreibungen der mit diesem Flugzeug möglichen Einsätze, der Fernsteuerungsmöglichkeiten und einiger Triebwerkskenndaten für dieses Flugzeug enthalten. "INTRODUCING THE MINICOPTER" zeigt und beschreibt in allgemeinen Begriffen einen kleinen, leichtgewichtigen und billigen Einmann-Hubschrauber mit Steuerung durch Einzelgriff und Gasstrahlantriebsmitteln an den Rotorenden. Eine Veröffentlichung mit dem Titel "INTRODUCING THE AEROSPACE GENERAL ITAV" offenbart einen Einmann-Hubschrauber mit Blattendenantrieb, den Treibstoff zum Antrieb der Gasstrahlmotoren sowie technische Daten, einschließlich Geschwindigkeit, Gewicht, Tragfähigkeit und Rotorabmessungen, doch wird dort keine detaillierte mechanische Bauweise oder Zwischenverbindung gezeigt, und auch eine Beschreibung der spezifischen Arbeitsweise der Einzelgriff-Steuerungsmittel oder spezifische Einzelheiten bezüglich des inneren Aufbaus der Gasstrahlmotoren und ihrer Antriebsmittel sind nicht enthalten.

Zudem zeigt eine Veröffentlichung mit dem Titel "WEST TEXAS LIFE" vom 8. Juni 1980 einen von einem Mann betätigten Hubschrauber und beschreibt in allgemeinen Begriffen die Triebwerke und das Einhand-Steuerungssystem. In dieser Offenbarung sind keine besonderen Einzelheiten enthalten, die im Detail die mechanische Art dieser Erfindung, den Mechanismus des Einhand-Steuerungssystems oder den inneren Aufbau des Gasstrahltriebwerks beschreiben würden.

## ZUSAMMENFASSUNG DER ERFINDUNG

Eins der Hauptziele dieser Erfindung ist die Schaffung eines Flugzeugs, das die bauliche Komplexität von Drehflüglern stark vereinfacht. Die zahlreichen Vorteile einer solchen Konstruktion liegen ohne weiteres auf der Hand, wenn man die Manövrierbarkeit während des Flugs und die Möglichkeit einer Landung in fern gelegenen, begrenzten Bereichen in Betracht zieht, die für herkömmliche Hubschrauber nicht zugänglich sind.

Ein weiteres Ziel der Erfindung ist die Schaffung eines Flugzeugs, dessen Bauweise von geringem Gewicht und leicht instandzuhalten ist, weil komplexe bewegliche Teile fehlen, woraus sich ergibt, daß die Kosten für Herstellung, Wartung und Instandhaltung eines solchen Flugzeugs innerhalb der finanziellen Möglichkeiten eines durchschnittlichen Bürgers liegen.

Ein weiteres Ziel der Erfindung ist die Schaffung eines Drehflüglers, der von kleinen Raketen angetrieben wird, die jeweils weniger als ein Pfund wiegen, an den Enden der Rotorblätter angebracht sind und ebensoviel Kraft liefern wie ein herkömmlicher Flugzeugmotor mit einem Gewicht von 220 lb und einer Leistung von 100 HP. Diese Raketen sind aber so klein und leicht, daß das Leergewicht des Flugzeugs stark herabgesetzt wird, sogar so stark, daß es als Hubschrauber "zum Anschnallen auf den Rücken" geflogen werden kann.

Ein weiteres Ziel der Erfindung ist die Schaffung eines Drehflüglers mit einem vereinfachten Steuerungssystem in Form eines einzigen Griffes, der in sich vereinigt Regelfunktionen zum zyklischen, lenkenden und kollektiven Verstellen der Anstellwinkel wie auch Drosselmittel für die Strahlmotoren. Durch Verwendung eines solchen vereinfachten Steuersystems bewegt ein Betreiber lediglich den Einzelgriff in die Richtung, in die er fliegen will. Die Flugsteuerung funktioniert wie folgt. 1. Durch Drücken oder Ziehen am Handgriff wird der Anstellwinkel des Rotors zyklisch verstellt und das Flugzeug je nach Fall zum Vorwärts- oder Rückwärtsfliegen gebracht. 2. Ein Heben oder Senken des Griffes bewirkt ein Verstellen des kollektiven Blattanstellwinkels, so daß das Flugzeug als Antwort auf solche Bewegungen steigt oder sinkt. 3. Ein Drehen des Griffes um seinen vertikalen Drehpunkt bewirkt eine Links- oder Rechtskurve des Flugzeugs in der gleichen Richtung, in der der Griff betätigt wird. 4. Wird der Handgriff nach vorn gedreht, erhält der Rotor mehr Kraft zur Erhöhung seiner Drehzahl in Anpassung an verschiedene Flugbedingungen bezüglich mitgeführter Last, Steigflug, Geschwindigkeit, Luftdichte etc.

Die Verwendung eines Einzelgriff-Steuerungssystems reduziert den üblichen Umfang an Geschicklichkeit und Zeit, der zum Erlernen des Umgangs mit diesem Flugzeug erforderlich ist, auf einen Bruchteil. Anders als bei herkömmlichen Hubschraubern, die Kenntnisse der komplexen mechanischen Bewegungen wie auch eine strenge Koordination aller vier Gliedmaßen des Piloten erfordern, ist bei diesem System die Flugsteuerung so vereinfacht, daß Personen mit durchschnittlicher Intelligenz innerhalb einiger weniger Stunden Ausbildungszeit das Gerät fliegen lernen können.

Ein noch weiteres Ziel der Erfindung besteht darin, den Hubschrauber mit einem Regler zu versehen, der die vom Piloten eingestellte Rotordrehzahl konstant hält, auch bei Veränderungen in den Flugbedingungen. In diesem Zusammenhang unterstützt bei Leistungsschwankungen ein koordinierendes Gestänge zwischen der Drossel und dem Verstellmechanismus für den Blattanstellwinkel den Regler beim Halten einer konstanten Rotordrehzahl zum Ausgleich sich ändernder Anstellwinkel der einzelnen Rotorblätter. Da beim Antrieb der Blattenden kein Gegendrehmoment entsteht, das den Rumpf zu drehen trachtet, braucht die übliche Koordination zwischen dem Anstellwinkel der einzelnen Hauptrotorblätter und dem Anstellwinkel des Heckrotors nicht geschaffen zu werden. Damit wird der übliche Hubschrauber-Steuermechanismus weiter vereinfacht.

Ein noch weiteres Ziel der Erfindung besteht in der Schaffung eines Drehflüglers, der dem Flugzeugführer angeschnallt werden kann, wobei dieser seine Beine als Fahrgestell benutzt. Dieses Merkmal ist dort wichtig, wo es erforderlich sein mag, das Fluggerät in begrenzten Bereichen zu landen, wie zum Beispiel auf einem Berghang, zwischen Bäumen oder an anderen Stellen, wo ein Mensch stehen kann. Trotzdem werden dem Flugzeug Mittel zum Befestigen eines Fahrgestells beigegeben, wie zum Beispiel Kufen, Schwimmkörper, Kufenräder oder dergleichen, das äußerst leicht angebracht werden kann, ohne daß dafür besonderes Geschick oder Spezialwerkzeuge erforderlich wären. Zudem kann das Flugzeug mit einer abnehmbaren Treibschraube mit Außenbordmotor versehen werden, die ihm einen zusätzlichen Operationsbereich verleiht.

Diese und weitere Gegenstände der Erfindung werden beim Lesen der folgenden Beschreibung im Zusammenhang mit den beigefügten Zeichnungen deutlich.

## KURZBESCHREIBUNG DER ZEICHNUNGEN

Abb. 1 ist eine Seitenansicht des Drehflüglers, bei dem der Flugzeugführer seine Füße als Fahrgestell benutzt, und zeigt einen Rumpf, der an seinem oberen Ende einen Hauptrotor, eine Hauptrotorsteuerung, einen am oberen Ende an der Rotorsteuerung befestigten Steuergriff, einen Heckausleger, der sich vom oberen Rumpf erstreckt, einen Heckrotor mit einer V-förmigen Heckfläche, einem Sitz, am unteren Ende des Rumpfes an jeder Seite befestigte Treibstoffbehälter und einen Frachtverschluß mit einem Trenngriff aufweist.

Abb. 2 ist eine Vorderansicht, die die Anordnung des Sitzes und des Geschirrs, den Steuergriff, einen Kraftstoffbehälter an jeder Seite des Sitzes, Armlehnen und eine durch Seile getragene Stange als Fußlehne zeigt.

Abb. 3 ist eine Draufsicht des Flugzeugs der Abbildungen 1 und 2.

Abb. 4 ist eine Seitenansicht des Flugzeugs, die den Rumpf und den Kiel mit Sitzbefestigungen zeigt.

Abb. 5 ist eine Draufsicht entlang der Linie 5-5 in Abb. 4, in der die Befestigungen des Sitzes am Rumpf gezeigt sind.

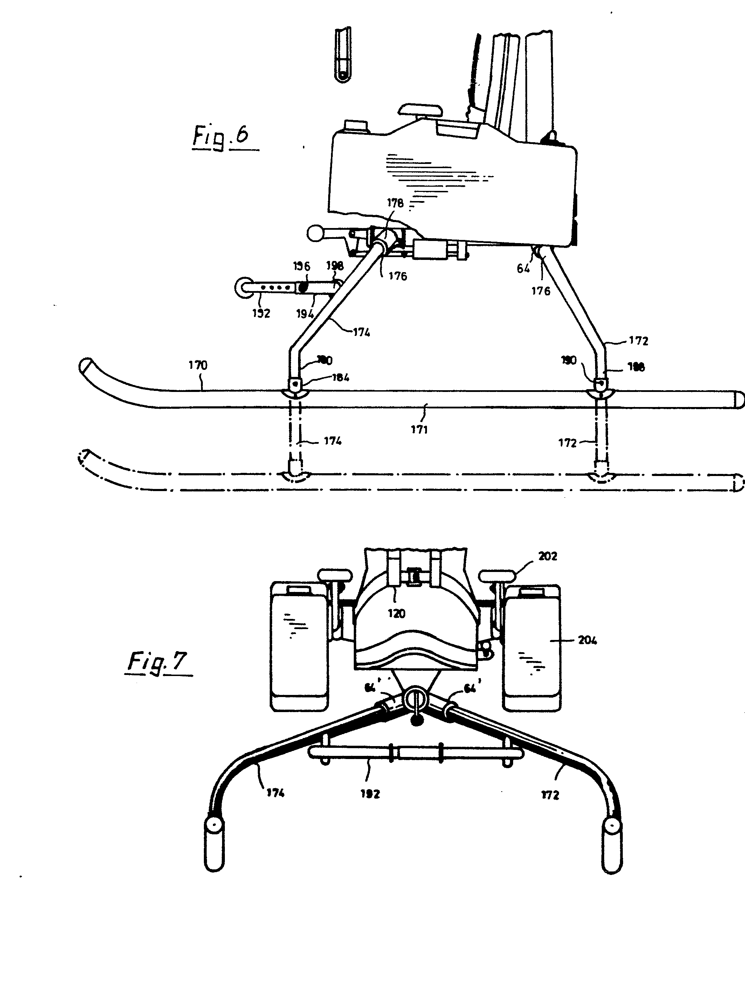

Abb. 6 zeigt eine abgewandelte Ausführung des Flugzeugs in Abb. 1, in der die Befestigung eines kufenförmigen Fahrgestells an Paßstücken des Rumpfes gezeigt ist.

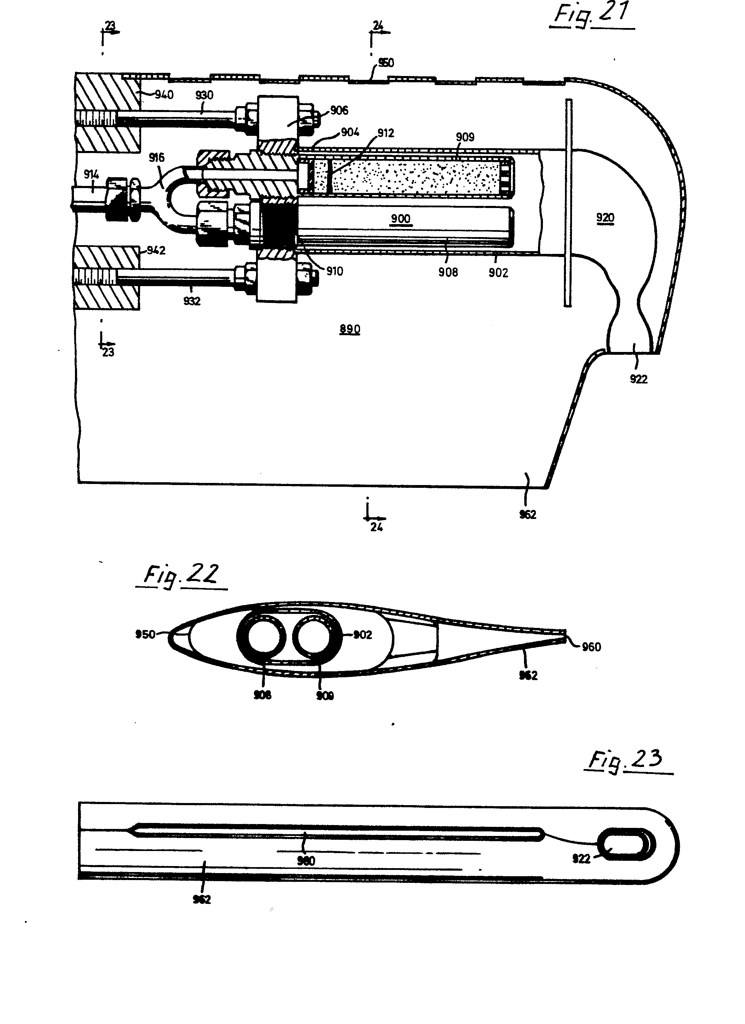

Abb.7 ist eine Vorderansicht des in Abb. 6 gezeigten Flugzeugs.

Abb. 8 ist eine Seitenansicht des Kielvorderteils, die eine diesem hinzugefügte vordere Befestigungsvorrichtung für das Fahrgestell zeigt.

Abb. 9 ist eine Seitenansicht einer weiteren abgewandelten Verkörperung der Erfindung, die das Flugzeug mit einem abnehmbaren und zusammenlegbaren Außenbord-Propellermotor zeigt.

Abb. 9 A ist eine Seitenansicht einer abgewandelten Form des Propellermotors.

Abb. 10 ist eine Vorderansicht des Flugzeugs in Abb. 9, die den am Fahrgestell montierten Propellermotor zeigt.

Abb. 11 ist eine Ansicht des Propellermotors in zusammengelegtem Zustand, bei dem der Propeller entfernt ist.

Abb. 12 ist eine Seitenansicht der Steuerung, einschließlich Taumelscheibe und Anschlüsse dafür, Anschlüsse für Rotor, Nabe und Rotorsteuergriff, die alle oberhalb des Rumpfes montiert sind.

Abb. 13 ist eine Rückansicht von Abb. 12, die reibschlüssige Verstellmittel für das schwenkbare Glockengehäuse und die Taumelscheiben-Antriebsarme zeigt.

Abb. 14 ist eine Schnittansicht des Glockengehäuses mit reibschlüssigen Verstellmitteln dafür sowie des Taumellagers.

Abb. 15 A ist eine Schnittansicht der vom Hauptrotor angetriebenen Treibstoffspindel, der Kraftabtriebsräder und des Reglersteuermechanismus.



BAD ORIGINAL

Abb. 15 B ist eine Seitenansicht des Treibstoffpumpenantriebs und der Heckrotor-Antriebswellen.

Abb. 16 ist eine Schnittansicht des Treibstoffregelventils, der Treibstoffregelspindel und des verstellbaren Spannhülsenmittels für das Ventil.

Abb. 17 ist eine Draufsicht der Treibstoffventile und Speiseleitungen zu jedem Raketenmotor.

Abb. 18 ist im Schnitt eine Draufsicht des Reglers mit Druckfedermitteln für die Ventilnadeln und Drehstabfedermitteln für die Steuerstange des Reglers.

Abb. 19 ist eine Seitenansicht des Reglers und der Anschlüsse zum Drosselgriff.

Abb. 20 ist entlang der Linie 23-23 in Abb. 21 im Schnitt die Endansicht eines Rotorblatts, in der die Treibstoffleitung gezeigt ist, die durch das Blatt hindurch zu dem am Blattende liegenden Strahlmotor geführt ist.

Abb. 21 ist eine Draufsicht des Gasstrahlmotors und des Rotorblattendes in abgebrochener Darstellung, die Schlitze in der Vorderkante des Rotorblatts nahe dessen Ende, Tragstangen für den Gasstrahlmotor und die Treibstoffleitungen zeigt.

Abb. 22 ist eine Schnittansicht des Rotorendes entlang der Linie 24-24 in Abb. 21, in der das Ende des Rotors mit einem daran befindlichen Strahlmotor und Schlitzen in der Vorderkante des Rotorblatts gezeigt ist, wobei die letzteren es ermöglichen, daß Luft ins Innere des Blatts eintritt, um über den Strahlmotor und die Tragstangen zwecks deren Kühlung zu strömen und aus einem Schlitz in der Hinterkante auszutreten.



BAD ORIGINAL

BAD ORIGINAL

0150812

Abb. 23 ist eine Ansicht, betrachtet von der Hinterkante des Rotorblatts in Vorwärtsrichtung, die einen Öffnungsschlitz im Rotorblatt neben dessen Ende zeigt, wodurch der Kühlluft ein Austritt aus dem Blattinnern ermöglicht wird.

BESCHREIBUNG DER BEVORZUGTEN AUSFÜHRUNGSFORM

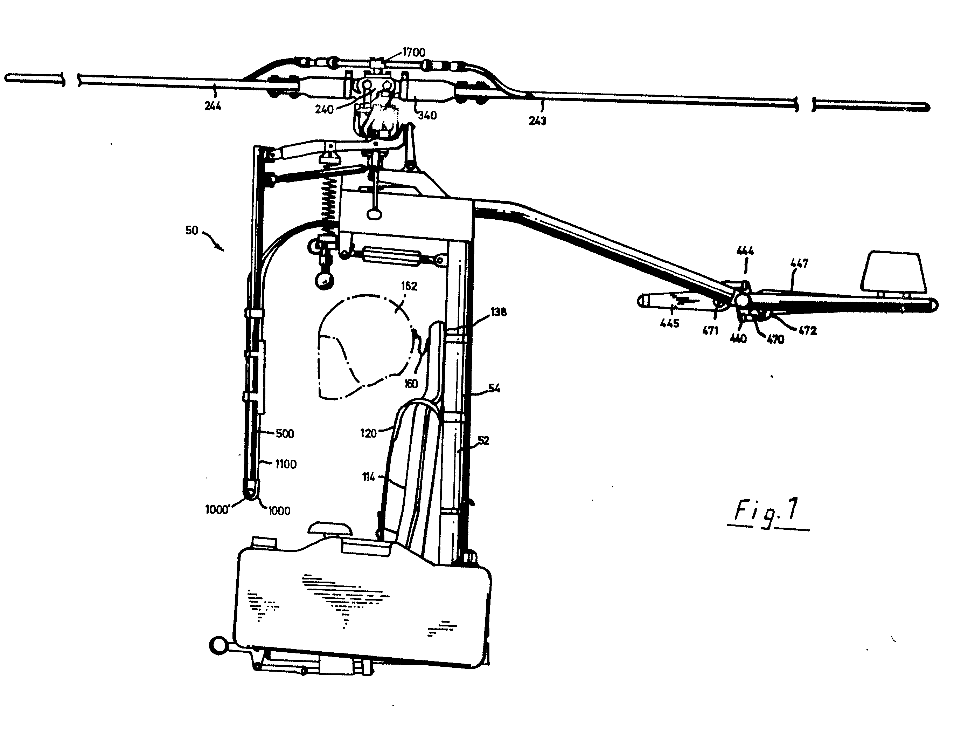

Unter Bezugnahme auf die weiteren Einzelheiten in Abbildungen 1, 2 und 3 wird der erfindungsgemäße Hubschrauber im allgemeinen mit der Bezugsnummer 50 bezeichnet und schließt ein einen Rumpf 52, zu dem ein Hohlrumpfteil 54 gehört, das einen daran über ein Paßstück 58 befestigten Kiel 56 aufweist. Beim Paßstück 58 handelt es sich um ein im wesentlichen L-förmiges Teil mit Öffnungen 60 und 62, in die die Enden des Rumpfes 54 und des Kiels 56 eingeschoben werden können. Am Paßstück 58 sind Rohrverlängerungen 64 (eins gezeigt) angebracht, die Öffnungen 66 zur Aufnahme von weiter unten ausführlicher zu erläuternden Fahrgestell-Tragbeinen aufweisen. Verstärkungsstege 68 verbinden die Paßstücke 58 und Verlängerungen 64, um den letzteren Festigkeit zu verleihen. Der Kiel 56 ist am vorderen Ende mit einem Paßstück 70 versehen, das dort auf den Kiel 56 aufgeschoben und daran mit einer Schnelltrennschraube 74 gesichert ist. Der Kiel 56 ist mit einer Tragschelle 76 versehen, die daran durch eine Schraube 78 gesichert ist. Die Tragschelle 76 übernimmt zusammen mit Bolzen 82 die Funktion zum Tragen einer angehängten Fracht. Das Ende 70 weist ein Paar Ösen 84 (eine gezeigt) auf, die drehbar einen Kniehebel 86 tragen. Der Kniehebel 86 hat einen Griff 88 und einen Hebel 90, an dem ein Ende 92 der Stange 94 befestigt ist. Die Stange 94 ist bei 96 am Bolzen 82 befestigt, der durch den Griff 88 zurückgezogen wird. Der Bolzen 82, der vom Flugzeugführer durch Hochziehen des Hebels 88 betätigt wird, trägt auslösbar einen Frachthaken.



BAD ORIGINAL

Ein Sitz 80 hat einen Sockel 100 und eine Sitzauflage 102, die aus jedem geeigneten Werkstoff zum Tragen eines durchschnittlichen Flugzeugführers hergestellt werden kann. Der verwendete Werkstoff ist jedoch vorzugsweise seinem Wesen nach kugelsicher, um den Flugzeugführer in Situationen zu schützen, bei denen das Flugzeug für militärische Operationen eingesetzt wird. Der Sockel 100 ist am Kiel 56 mittels dämpfendem Material 104 angebracht, das bei abruptem und erzwungenem Aufsetzen des Fahrzeugs als Stoßdämpfer wirkt. Das Dämpfungsmaterial 104 wird am Sockel 100 durch jedes geeignete Mittel und am Kiel 56 durch geeignete auslösbare Mittel (nicht gezeigt) gesichert. Der Sockel 100 und die Sitzauflage 102 sind so ausgebildet, daß sie einen Flugzeugführer bequem tragen. Die Frontverkleidung 114 bildet mit dem Sockel 100 eine durchgehende Einheit und hat Konturen, die sich dem oberen Rücken, Hals und Kopf eines Piloten anpassen. Die den Piloten aufnehmenden Flächen 102 und 114 können zusätzliche stoßdämpfende Mittel aufweisen, die bei abrupten Landungen Stöße aufnehmen.

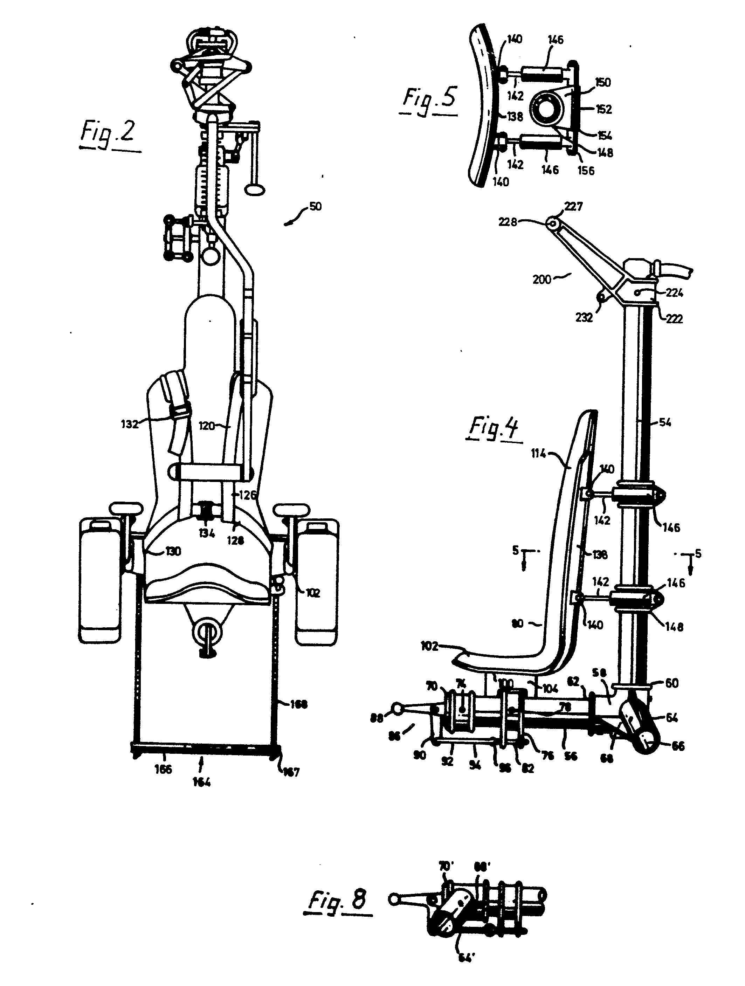

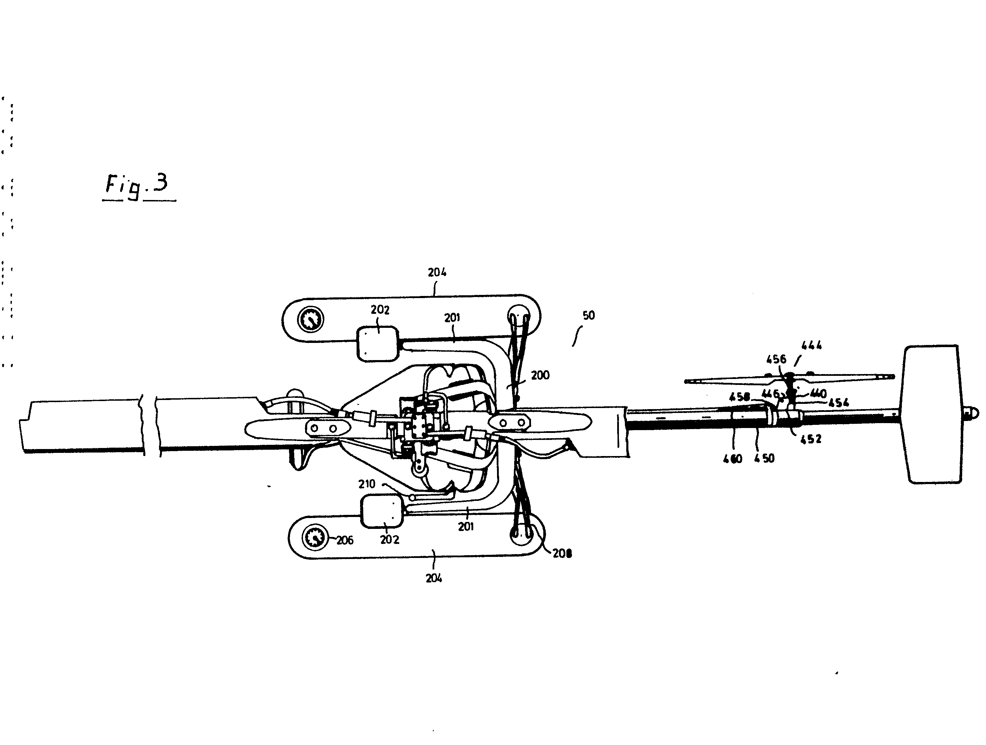

Ein über die Schulter geführter Geschirrgurt 120, Abb. 1 und 2, ist am Rumpf 54 durch Ringe gesichert, die eine gleitbare Befestigung des Gurts daran ermöglichen. Die unteren Enden 126 des Geschirrs sind an einem Beckengurt 128, Abb. 2, gesichert. Die Enden des Beckengurts 128 werden an den Enden 130 am Rumpf 54 durch jedes geeignete Mittel befestigt. Eine Schnalle 132 ist zum Verstellen des Schultergeschirrs 120 und eine ähnliche Schnalle 134 zum Verstellen des Beckengurts 128 vorgesehen. Zusammen mit dem Geschirr kann vorn eine kugelsichere Brustplatte (nicht gezeigt) verwendet werden, um dem Piloten bei militärischen Einsätzen zusätzlichen Schutz zu geben.



BAD ORIGINAL

Die Rückenlehne 138 des Sitzes 80 ist mit einem Paar Tragschellen 140, Abb. 4 und 5 (jeweils eine gezeigt), versehen, die die Enden von Stoßdämpferkolben 142, deren entgegengesetzte Enden in Stoßdämpferzylinder 146 einmünden, drehbar unterstützen. Die Stoßdämpferzylinder 146 sind am Rumpf 54 mittels Manschetten 148 gesichert. Die Manschetten 148 sind mit Verlängerungen 150 versehen, die in Lagerzylindern 152 enden. Die Lagerzylinder 152 tragen drehbare Stangen 154, deren Enden 156 an den Stoßdämpferzylindern 146 befestigt sind.

Ein zusätzlicher Stoßdämpfer 160 kann mit dem Pilotenhelm benutzt und an der Rückenlehne 138 neben dessen Nacken- oder Kopfbereich befestigt werden. Bei diesem Stoßdämpfer kann es sich dem Wesen nach um ein biegsames Kabel handeln, von dem ein Ende am Helm 162 des Piloten befestigt ist und dessen Funktion darin besteht, die Vorwärtsbewegung des Kopfes des Piloten im Fall einer abrupten Vorwärtslandung oder eines Zusammenstoßes zu begrenzen. Eine Stütze 164 für die Füße des Piloten umfaßt eine waagerechte Stange 166, deren Enden 167 an die unteren Enden von Seilen oder ähnlichem 168 gesichert sind. Die oberen Enden der Seile sind an einem Tragmittel 201 für Treibstoffbehälter befestigt, das am Rumpf 54 angebracht ist.

In dieser Ausführungsform der Erfindung soll das Flugzeug einem Piloten angeschnallt werden, der seine Füße als Fahrwerk benutzt. Seine Bauweise ist überall dort vorteilhaft, wo sich für einen Piloten die Notwendigkeit einer Landung in unwegsamem Gelände oder an einem Berghang ergeben mag, wo herkömmliche Hubschrauber nicht landen können.



BAD ORIGINAL

31. Drehflügel-Fluggerät gemäß Anspruch 28, bei dem das genannte Steuermittel aus einem einzigen, mit dem Gehäuse verbundenen Griff oder Knüppel besteht, wodurch eine Vorwärts- oder Rückwärtsbewegung des Griffes das Gehäuse in die gleiche Richtung dreht, wodurch die Neigungsebene der Rotorblätter entgegengesetzt zur Bewegungsrichtung des Griffs gebracht und bewirkt wird, daß das Fluggerät je nach Neigung der Ebene der Rotorblätter vorwärts oder rückwärts fliegt.

32. Drehflügel-Fluggerät gemäß Anspruch 31 und:

genannter Griff mit Anschluß zum Gehäuse durch eine Kippstange, deren äußerstes Ende seinen Drehpunkt um einen Anker hat, wodurch bei Aufwärts- oder Abwärtsbewegung des Griffes das Gehäuse sich auf der Welle vertikal bewegt und bewirkt, daß die Kreuzgestänge auf die Rotorblätter zum Vergrößern oder Verkleinern ihres Anstellwinkels einwirken und es somit dem Flugzeug ermöglichen, je nach Aufwärts- oder Abwärtsbewegung des genannten Griffes zu steigen oder zu sinken.

33. Drehflügel-Fluggerät gemäß Anspruch 31 und:

genannter Handgriff in drehbarer Anordnung um eine vertikale Achse, Konsolmittel mit Befestigung am oberen Ende des genannten Griffes, jedoch dagegen versetzt, biegsame Kabelmittel mit Befestigung an der genannten versetzten Konsole an einem Ende und am Heckrotor am andern, drehbare Mittel zur Verbindung des Heckrotors und des genannten biegsamen Kabels, wodurch beim Drehen des genannten Griffes um genannte vertikale Achse das biegsame Kabel auf den

0150812

Wie am besten in Abb. 3 zu erkennen, ist das Flugzeug mit einer U-förmigen Stange 200 versehen, die Verlängerungsarme 201 aufweist. Die U-förmige Stange und die Arme 201 sind durch geeignete Mittel, zum Beispiel Schweißen oder ähnliches, am Rumpf 54 befestigt. Die Verlängerungsarme 201 werden zum Tragen von Ellbogenlehnen 202 an ihren Abschlußenden benutzt. Treibstoffbehälter 204 sind auslösbar an den Verlängerungsarmen 201 durch jedes beliebige geeignete Schnellverbindungsmittel (nicht gezeigt) befestigt, das während des Fluges betätigt werden kann. Die Treibstoffbehälter sind mit Treibstoffmessern 206 und Treibstoffzuleitungen 208 versehen, die zu in den Enden der Rotorblätter befindlichen Strahlmotoren führen. An jedem Behälter ist auch eine Entlüftungsleitung angebracht. Ein Griff 210 einer von Hand zu betätigenden Hilfspumpe ist vorgesehen, um den Treibstoff in den Treibstoffleitungen für die Anfangszündung unter Druck zu setzen und den Strahlmotoren zuzuführen. In den Behältern ist eine Entlüftung vorgesehen, die einen Druckaufbau im Behälterinnern verhindert.

Der Rumpf 54, Abb. 4, ist mit einem Paßstück 200 versehen, zu dem eine Manschette 222 gehört, die ans obere Ende des Rumpfes durch Befestigungsmittel 224 gesichert ist. Mit der Manschette 222 zu einer festen Einheit verbunden und sich davon aufwärts und vom Rumpf nach vorn erstreckend ist ein Paar paralleler Arme 226 (einer gezeigt). Die Enden 227 der Arme 226 an der Manschette entgegengesetztem Ende haben darin eingearbeitete Löcher zur Aufnahme einer Schraube 230, die zum Sichern der Hauptrotorbasis 530, Abb. 12, an das obere Ende des Rumpfes benutzt wird. Einer der Arme 226 hat einen daran angearbeiteten Ansatz 232 neben der Manschette 222, dessen Funktion weiter unten beschrieben werden soll.



BAD ORIGINAL

Das Paar paralleler, sich nach oben erstreckender Arme 226 trägt die Hauptrotorwelle und die Flugsteuerung, die alle weiter unten in näheren Einzelheiten beschrieben werden.

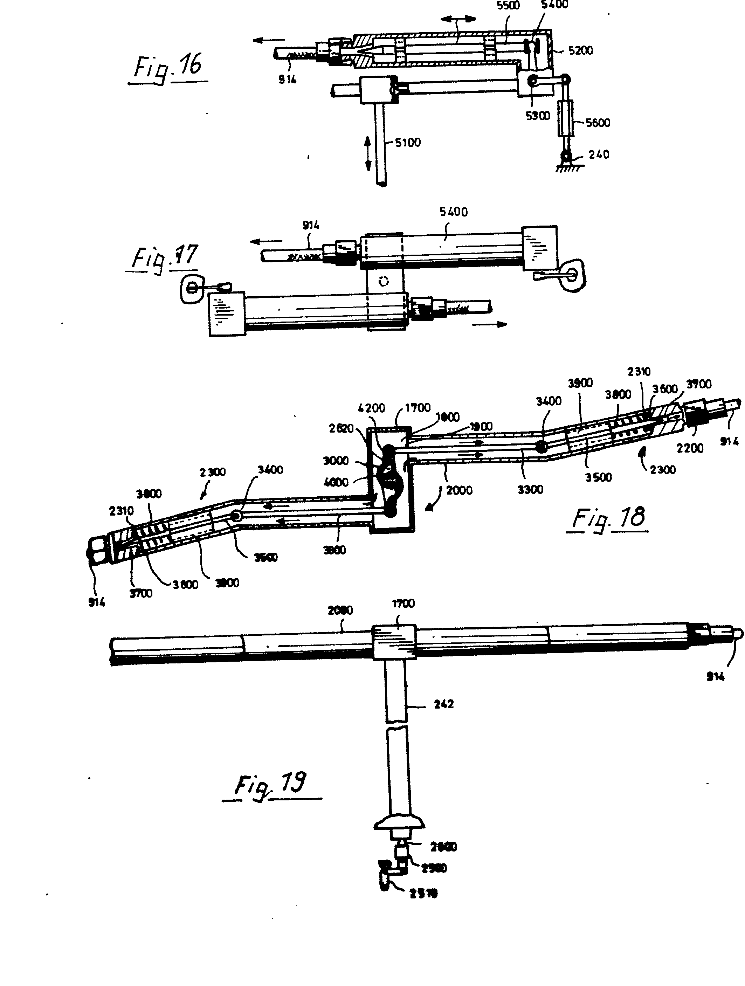

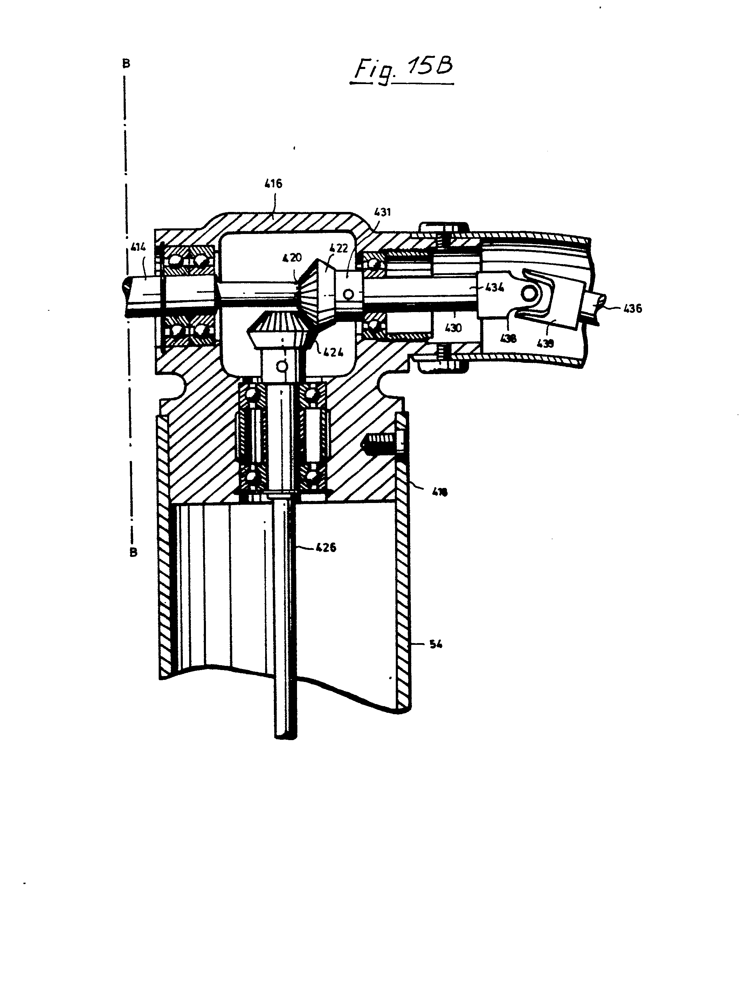

Unter Bezugnahme auf Abbildungen 12 und 13 umfaßt der Hauptrotorzusammenbau eine drehbare Rotornabe 240, an der Rotorblätter 243 und 244 angebracht sind, wie am besten in Abb. 1 zu erkennen. In Abb. 12 ist die sich nicht drehende Rotorwelle 242 an ihrem oberen Ende mittels Kugellagern (nicht gezeigt) an der Nabe 240 angebracht. Die Welle erstreckt sich durch den Gehäusezusammenbau 246, dessen unteres Ende in die Rotorbasis 530 hineinführt und daran gesichert ist. Darunter befindet sich ein Getriebe 250, dazwischen jedoch das Paar paralleler Arme 226. Das Gehäuse 252, Abb. 14, ist im Querschnitt konusförmig ausgebildet und hat unten ein großes offenes Ende 254 und oben ein kleineres Ende 256, wie in Abb. 14 gezeigt. Ein Taumelscheibenantriebsring 257 ist am oberen Ende des Gehäuses 252 durch Lager 260 drehbar ausgeführt. Der Taumelscheibenantriebsring 257 ist mit mehreren Ösen 262 mit darin befindlichen Bohrungen 264 versehen, die in Verbindung mit verschiedenen Gestängen benutzt werden, wie weiter unten beschrieben. Im Gehäuse 252, neben dem oberen Ende 256, befindet sich eine konkav gebogene Lagerfläche 267, die um die obere äußere Peripherie des balligen Endes 270 der Hülse 272 herum sitzt. Die Hülse 272 ist hohl und sitzt auf der Rotorwelle 242, die sich durch sie hindurch erstreckt. Das untere Ende 276 der Hülse 272 ist bei 274 mit einem Gewinde versehen, um daran eine Manschette 275 aufnehmen zu können, die Ansätze (nicht gezeigt) aufweist, welche an dem Mechanismus angebracht werden, der den gesamten Taumelscheibenzusammenbau hebt und senkt und dadurch den Anstellwinkel der einzelnen Blätter verstellt. Das untere Ende 254 des Gehäuses 252 hat an der Innenfläche 278 ein Gewinde und eignet sich zur Aufnahme einer mit Gewinde versehenen Verlängerung 280 eines zweiten, kleineren konusförmigen Gehäuses 282. Das zweite, kleinere konusförmige Gehäuse 282 wird in das Ende des Gehäuses 252 geschraubt und kann dazu nach innen und davon nach außen verstellt werden, so daß die Lagerfläche 286 neben ihren oberen Ende 284 auf der unteren äußeren Peripherie des balligen Endes 270 sitzt. Das äußere Ende 290 des Gehäuses 282 hat ein daran angebrachtes Kettenrad 292, das über eine Kette 298, Abb. 13, mit einem Kettenrad 299 am Ende eines verstellbaren Griffs 296 verbunden ist. Der Griff 296 dreht sich in Buchsen im äußeren Ende der Konsole 253, bei der es sich um eine Verlängerung des Gehäuses 252 handelt. Der Griff dreht die Kette 298 und Kettenräder 292 und 299 zur Erhöhung oder Verminderung des Drucks der gebogenen Lagerfläche 285, Abb. 14, gegen die untere Peripherie des balligen Endes 270. Eine Erhöhung oder Verminderung des Reibdrucks am balligen Ende 270 der Hülse 272 bewirkt ein festes oder lockeres Halten des Gehäuses gegen Kippen am balligen Ende 270, wie von jedem einzelnen Piloten gewünscht.

Die Mehrzahl von Ösen 262 am Taumelscheibenantriebsring 257, Abbildungen 12, 13 und 14, tragen Enden 300 eines Paars Taumelscheibenantriebsarme 302. Die oberen Enden 304 der Antriebsarme 302 sind um Gelenke drehbar mit den unteren Enden 306 von Antriebsgestängen 308 verbunden, deren obere Enden um Gelenke drehbar mit Klappgelenken 312 verbunden sind, die ihrerseits an die Hauptrotornabe 240 geschraubt sind. Auf diese Weise rotiert das Taumelscheibenantriebsgestänge, wenn die Hauptrotoren sich auf Welle 242 drehen, am Element 257 mittels der Verbindungen zu den Antriebsgestängen. Ein Paar Quergestängeglieder 320 zum Verstellen der Rotorblattanstellwinkel sind an ihren unteren Enden 322, wie am besten aus Abb. 12 ersichtlich, mit den Ösen 262 des Taumelscheibenantriebsrings durch Schrauben oder ähnliches 324 verbunden. Die oberen Enden 326 der Quergestängestäbe 320 sind an Schubstangen 330 durch Stellschrauben 332 befestigt. Die oberen Enden 334 der Schubstangen 330 sind an Armen 335 zum Verstellen des Blattanstellwinkels angebracht, deren obere Enden am Hauptrotorgehäuse 340 befestigt sind, wie am besten aus Abbildungen 1 und 12 ersichtlich.

Wie ohne weiteres verständlich sein dürfte, sind die Antriebsgestänge für die Taumelscheibe, die in Scherenform ausgeführt sind, an einem Ende mit den Rotoren und am entgegengesetzten Ende mit dem äußeren Teil der Taumelscheibe verbunden, so daß beim Drehen der Rotore der äußere Teil der Taumelscheibe auch rotiert. Zudem bewirken die Gestänge zum Verändern des Anstellwinkels ein zyklisches und kollektives Verstellen des Blattanstellwinkels, wenn das Taumellager kippt oder sich nach oben und unten bewegt.

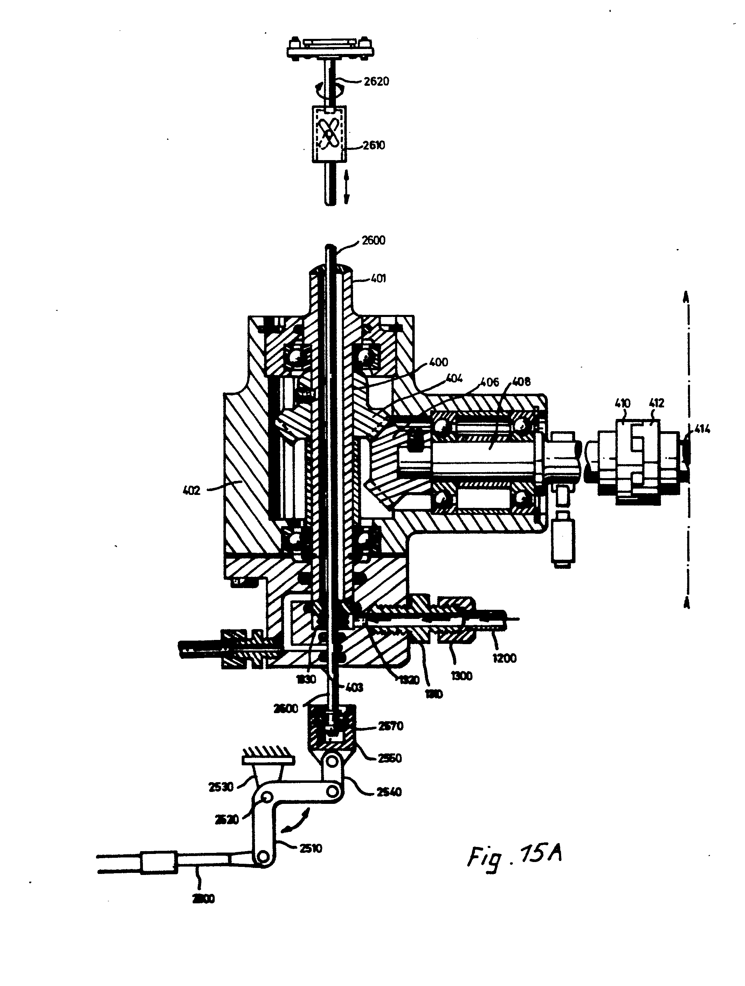

Wie am besten in Abb. 15A gezeigt, schließt das Ende 400 einer Treibstoffspindel 401 im Getriebekasten 402 ab. Das abschließende Ende der Treibstoffspindel 401 weist ein Zahnrad 404 auf, das mit einem Zahnrad 406 der Welle 4o8 in Eingriff gelangt. Die Treibstoffspindel 401 erstreckt sich durch die Rotorwelle (nicht gezeigt) und ist an ihrem oberen Ende (nicht gezeigt) an der Nabe befestigt, um sich damit zu drehen. Das äußerste obere Ende der Treibstoffspindel erstreckt sich durch die Nabe und in ein Gehäuse oberhalb der Nabe; dieses Merkmal wird in weiteren Einzelheiten nachstehend erläutert. Die Welle 408 hat eine Kupplung 410, die mit einer Kupplung 412 einer Stange 414 in Eingriff steht. Stange 414, Abb.15B,



BAD ORIGINAL

tritt in einen Getriebekasten 416 ein, der am oberen Ende 418 des Rumpfes 54 befestigt ist. Das abschließende Ende 420 der Stange 414 hat ein Kegelrad 422, das mit einem Kegelrad 424 der Stange 426 in Eingriff steht. Das entgegengesetzte Ende der Stange 426 ist mit der Treibstoffpumpe (nicht gezeigt) verbunden. Auf diese Weise wird, wenn die Treibstoffspindel 401 in der Rotorwelle 242 mittels ihrer Verbindung mit der Nabe dreht, wobei ihr entgegengesetztes Ende mit der Pumpe der Treibstoffbehälter verbunden ist, die Pumpe zwecks Versorgung der Strahlmotoren mit Treibstoff betätigt.

Kegelrad 422 hat an seinem Ende 431 eine eingezapfte Stange 430. Das entgegengesetzte Ende 434 der Stange 430 ist über Verbinder 438 und 439 mit einer Stange 436 verbunden. Das entgegengesetzte Ende der Stange 436 hat ein Zahnrad (nicht gezeigt), das mit einem Zahnrad (nicht gezeigt) am Ende der Heckrotortragstange 440 in Eingriff steht, wie am besten in Abb. 3 ersichtlich. Auf diese Weise dreht sich der Heckrotor bei Rotation der Treibstoffspindel 401 durch die Zwischenverbindung der letzteren mit der Heckrotorantriebswelle und der Nabe und den Hauptrotorblättern. Die Tragstange 440 trägt den Heckrotor 444, dessen Anstellwinkel mit Hilfe eines Kniegelenks 446 verstellt werden kann. Das Kniegelenk 446 ist schwenkbar am Heckrotorausleger 450 durch eine Konsole 452 befestigt. Das Ende 454 des Kniegelenks ist an den Verstellarmen für den Anstellwinkel des Heckrotors durch geeignete Glieder 456 befestigt. Das entgegengesetzte Ende des Kniegelenks 458 ist mit einem biegsamen Kabel 460 verbunden, wie in Abb. 12 gezeigt, das entgegengesetzte Ende 461 des biegsamen Kabels 460 ist mit einem Arm 461 verbunden, der am abschließenden Ende 502 eines Steuergriffs 500 starr befestigt ist.



BAD ORIGINAL

In Abb. 12 ist das abschließende Ende 502 des Steuergriffs 500 um eine vertikale Achse drehbar mittels eines Gelenks 504, das durch eine waagerechte Achse an einem Ende 508 eines Jocharms 510 angebracht ist. Der Jocharm 510 ist mit dem Gehäuse 252 vor seinem entgegengesetzten Ende 514 mittels eines Stifts 516 oder dergleichen verbunden. Das Ende 514 des Jocharms 510 hat einen kugelartigen Nippel 520, der in einem Lager 522 eines Drehankergestängearms 524 sitzt. Das Ende 526 des Drehankergestängearms 524 ist am horizontalen Schenkel 532 einer Tragkonsole 531 angebracht. Die Tragkonsole 531 ist L-förmig ausgebildet und hat den horizontalen Schenkel 532 verstellbar an dem Paar nach oben verlaufender Tragarme 226 gesichert. Der andere, vertikal nach unten verlaufende Schenkel 533 der L-förmigen Konsole weist neben dem fernen Ende 537 einen mit ihm eine geschlossene Einheit bildenden waagerechten Schenkel 535 auf. Das Ende 537 der L-förmigen Konsole ist mit einem Spannschloß 539 verbunden, dessen entgegengesetztes Ende an einer Konsole 232 angebracht ist, die mit den beiden Tragarmen 226 neben der Manschette 222 eine feste Einheit bildet. Durch Verstellen des Spannschlosses läßt sich der gesamte Rotorzusammenbau zum Trimmen in Längsrichtung und zum Verändern des Schwerpunkts der Hauptrotoren vorwärts und rückwärts kippen.

Wenn der Steuergriff 500 senkrecht angehoben wird, bewegt sich der Jocharm 510 um seinen Drehpunkt auf dem Gestänge 524 und hebt dabei gleitend das Gehäuse 252 und den Taumelscheibenzusammenbau 246 senkrecht an der Rotorwelle 242. Dabei werden die Gestänge 320 zum Verstellen des Anblasewinkels betätigt, die an den Rotorblättern angebracht sind und eine Vergrößerung des Anblasewinkels der Hauptrotoren bewirken. Dieser Vorgang wird gewöhnlich als kollektives Verstellen des Anblasewinkels bezeichnet, wodurch über aerodynamische Drücke ein Steigen des Flugzeugs bewirkt wird. Auf ähnliche Weise gleiten beim Ziehen des Steuergriffs 500 nach unten das Gehäuse 252 und die Taumelscheibe 246 an der Hauptwelle 242 abwärts und betätigen dabei die Anstellwinkelverstellgestänge 320, die jetzt den Anblasewinkel der Hauptrotorblätter verkleinern und dadurch ein Sinken des Flugzeugs bewirken, was in der einschlägigen Technik gut bekannt ist.

Der Steuergriff 500 hat eine zweite Konsole 550, die um eine senkrechte Achse 552 drehbar gelagert ist. Ein Ende 554 einer Kippstange 556 ist um eine horizontale Achse 560 an die Konsole 550 horizontal angelenkt. Das entgegengesetzte Ende der Kippstange 556 ist drehbar mit einem Konsolenarm 562, Abb. 13, verbunden. Der Konsolenarm 562 ist über eine Konsole 253 starr am Gehäuse 252 befestigt. Der über die Kippstange wirkende Griff 500 ermöglicht es dem Flugzeugführer,die Flugrichtung des Flugzeugs zu beeinflussen. Wenn beispielsweise ein Pilot vorwärts zu fliegen wünscht, drückt er den Steuergriff 500 nach vorn, und dieser dreht sich dann um den Bolzen 508'. Diese Bewegung überträgt sich durch die Kippstange 556, die an einem Ende mit dem Gehäuse 252 verbunden ist, und bewirkt, daß sich das untere Ende 254 des Gehäuses 252 in gleicher Richtung wie der Griff nach vorn bewegt, wie durch die Strichpunktlinien in Abb. 14 dargestellt. Das Gehäuse 252 und der Taumelscheibenantriebsring 257 drehen sich am balligen Ende 270 der Hülse 272 so, daß der Taumelscheibenantriebsring in Pfeilrichtung (T) kippt, wie in Abb. 14 veranschaulicht. Dies bewirkt, daß die Anstellwinkelverstellstange 320 auf die Schubstange 330 drückt und dadurch die Hauptrotorblätter so geneigt werden, daß der vordere Teil der von den rotierenden Blättern



BAD ORIGINAL

0150812

gebildeten scheibenförmigen Kippebene sich leicht nach vorn abwärts neigt und dabei eine Bewegung des Flugzeugs in Vorwärtsrichtung bewirkt. Wenn der Griff nach hinten oder von einer Seite zur anderen bewegt wird, neigt sich die Kippebene der Rotorblätter in die Richtung der Kippbewegung und bewirkt dadurch, daß das Flugzeug sich in dieser Richtung bewegt. Wie zu sehen ist, gestattet die Wirkung des Steuergriffs 500 es dem Piloten, das Flugzeug mit einer Hand zu steuern.

Da der Steuergriff um vertikale Achsen der Konsolen 504 und 550 drehbar ist, wird bei einer Bewegung des Griffs um diese Achse am Ende 461 des biegsamen Kabels 460 geschoben oder gezogen, wie am besten aus Abb. 12 ersichtlicht. Das entgegengesetzte Ende des biegsamen Kabels 460 betätigt einen Kniehebel 446 so, daß der Anstellwinkel des Heckrotors 444 als Reaktion auf eine derartige Drehbewegung des Steuergriffs 500 verändert wird, wie in Abb. 3 dargestellt. Dieser Vorgang bewirkt, daß der Heckrotor durch die Luft schneidet und dabei das Heck des Flugzeugs nach rechts oder links drückt, je nachdem, ob der Steuergriff nach rechts oder links gedreht wird. Auf diese Weise wird bewirkt, daß das gesamte Flugzeug um die Rotorschubachse schwenkt, die der Vertikalachse der Rotorwelle 242 entspricht.

Wie in Abb. 1 gezeigt, sind die Blätter 445 und 447 des Heckrotors 444 einzeln drehbar mittels Drehbolzen 471 am Träger 440 befestigt. An der Konsole 470 angebrachte Blattfedern 472 halten die Blätter radial in Stellung. Die so angebrachten einzelnen Rotorblätter machen deren Rückwärtsdrehen für den Fall leichter, daß eins von ihnen gegen ein Hindernis stößt, wie zum Beispiel Instandhaltungspersonal oder sonstige Hindernisse. Die Verwendung von Blattfedern erlaubt den einzelnen Blättern ein



BAD ORIGINAL

BAD ORIGINAL

Wegbiegen vom Objekt und verhindert auf diese Weise Beschädigungen an den Rotorblättern oder eine Verletzung von Personen.

Wie in Abb. 12 dargestellt, ist zwischen dem Jochzusammenbau 510 und dem Ansatz 535 der L-förmigen Konsole 530 eine Feder 800 montiert, die zwischen dem Jocharmzusammenbau 510 und dem Konsolenansatz 535 mittels eines Drehgriffs 803 zusammengedrückt werden kann, dessen mit Gewinde versehenes Ende 804 in eine Öffnung 806 des Konsolenansatzes 535 geschraubt ist. Durch eine Verstärkung oder Verminderung des Drucks auf Feder 800 durch den Drehgriff 803 wird der Steuergriff 500 höher oder niedriger, damit jeder einzelne Pilot die Möglichkeit hat, eine Einstellung für unterschiedlichen Handstützdruck am Steuergriff vorzunehmen. Der einzelne Pilot kann damit die kollektive Anstellwinkelverstellung so abstimmen, wie es ihm körperlich paßt. In ähnlicher Weise kann ein Pilot den reibschlüssigen Steuergriff 296 zum zyklischen Verstellen des Anblasewinkels auf unterschiedliche Flächendrücke der Lager 267 und 286 gegen das ballige Ende 270 einstellen, wie in Abb. 12 und 14 gezeigt. Diese Einstellmöglichkeit gestattet es dem Piloten auch, die notwendige Kraft zum Neigen des Gehäuses 252 um das ballige Ende 270 zu bestimmen.

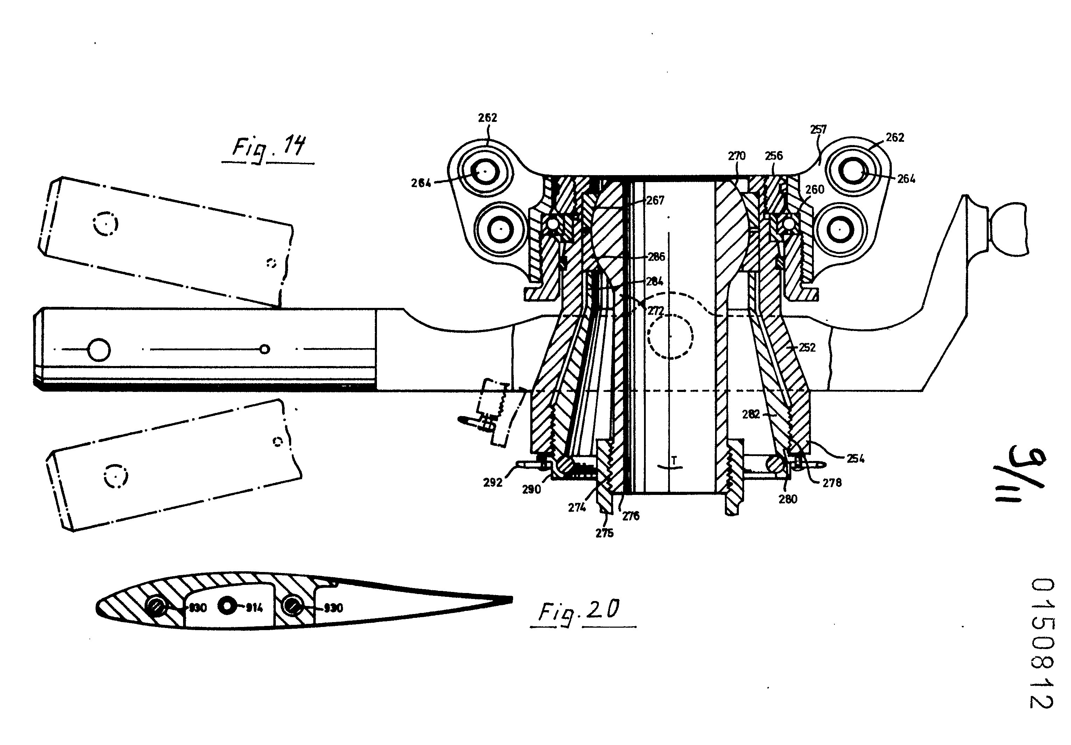

Der Aufbau der Hauptrotorblätter 243 und 244 ist am besten in Abb. 20, 21, 22 und 23 zu erkennen. Die Enden 890 der Rotorblätter tragen in ihrem Innern kleine Gasstrahlmotoren 900. Die Gasstrahlmotoren 900 sind Gegenstand einer noch unerledigten Anmeldung des Anmelders unter der Nummer 898,271, die am 18. April 1978 eingereicht wurde und deren Inhalt hier für Bezugszwecke eingefügt ist.



BAD ORIGINAL

0150812

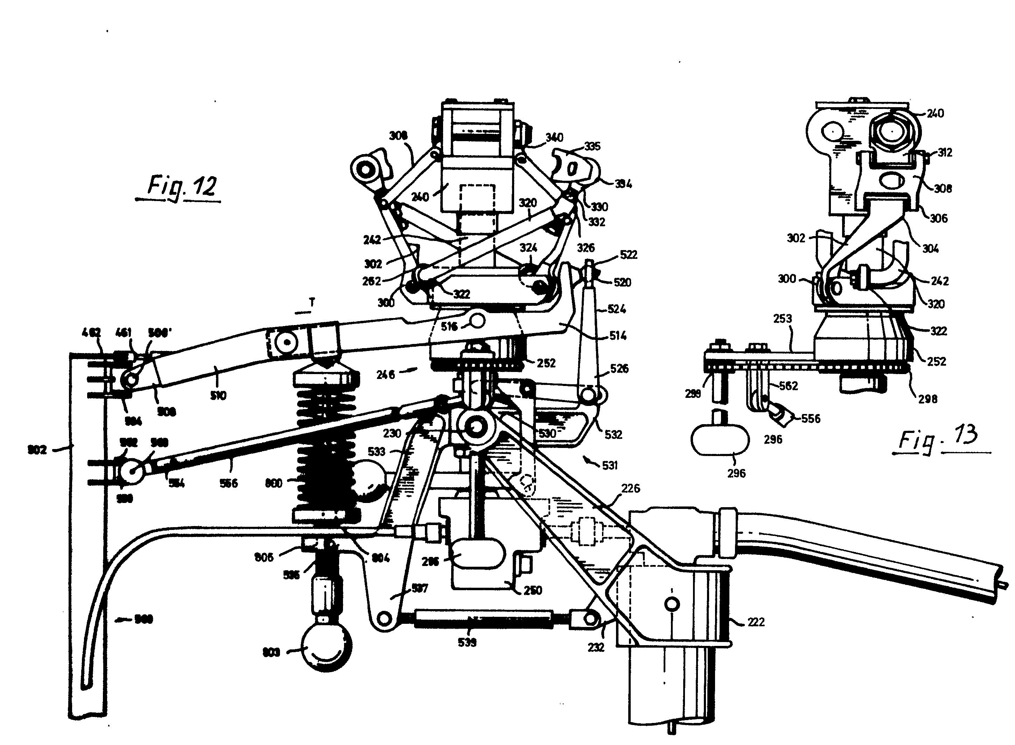

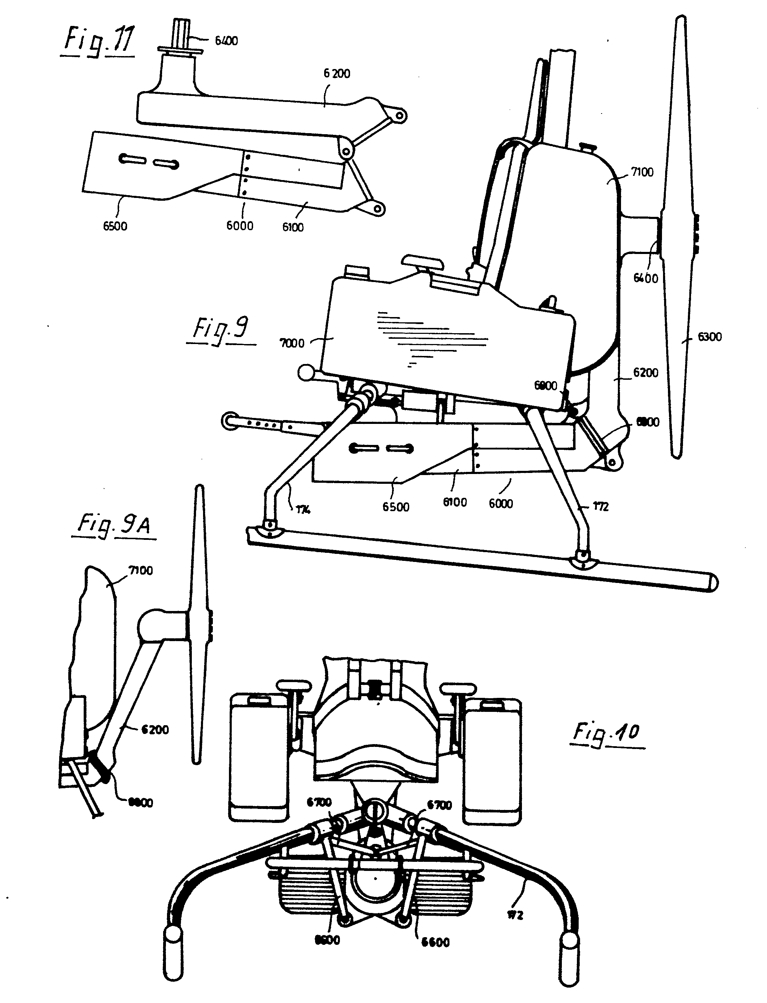

Wie in Abbildungen 21 und 22 gezeigt, umfassen die Gasstrahlmotoren 900 (einer davon zu beschreiben) ein Gehäuse 902, von dem ein Ende 904 an einen einzelnen Block 906 geschweißt oder in anderer Weise daran befestigt ist. Herausnehmbar unterstützt in Block 906 und innerhalb des Gehäuses 902 ist ein Paar Blechgefäße 908 und 909, die einen Katalysator enthalten. Jedes Gefäß ist am Block 906 durch Gewinde 910 befestigt. Zudem enthält jedes Gefäß im Abstand zueinander angeordnete Silbersiebe 912 (eins gezeigt), die zum Zersetzen des von den Treibstoffbehältern durch Leitung 914 zugeführten Treibstoffs dienen. Der Treibstoff tritt in eine Hosenleitung 916 ein, die ihn zu jedem der beiden Blechgefäße leitet, in denen er beim Auftreffen auf die Silbersiebe 912 abgebaut wird. Die resultierende Zersetzung des Treibstoffs erzeugt Hochdruckdampf, der in Kammer 920 eintritt, heftig entspannt wird und durch Düse 922 austritt. Dieser unter hohem Druck erfolgende Austritt des Gases aus Düse 922 erzeugt eine Kraft. Die entsprechende Reaktionskraft bewirkt ein Drehen des Rotors um Welle 242. Stangen 930 und 932 sichern die Gasstrahlmotoren an den äußeren Enden 940 und 942 der Rotorblattholme.

Jedes Blatt hat Öffnungen 950 an den Vorderkanten 952, die es ermöglichen, daß im Innern des Blattes Luft strömt und um die Gasstrahlmotoren herumgeführt wird. Wie in Abb. 23 gezeigt, ist in der Hinterkante 962 eines jeden Blattes ein Schlitz vorgesehen, der es der in Öffnungen 950 eintretenden Luft ermöglicht, aus dem Blatt auszutreten. Auf diese Weise werden die Gasstrahlmotoren durch die über sie hinwegströmende Luft gekühlt.



BAD ORIGINAL

BAD ORIGINAL

0150812

Treibstoff für die Gasstrahlmotoren wird durch eine Pumpe geliefert, die von der Pumpenantriebswelle 426 betätigt wird; diese letztere wird innerhalb des Rumpfes 54 geführt, wie aus Abb 15B ersichtlich. Wie am besten in Abb. 1 zu erkennen, ist am Ende 1100 des Steuergriffs 500 eine Drossel 1000 vorgesehen. Die in Abb. 3 erkennbaren Treibstoffleitungen 208 von den Behältern 204 können im hohlen Rumpf 54 untergebracht werden und an jeder geeigneten Stelle neben dem Kopf 418, Abb. 15B, austreten. Die beiden Treibstoffleitungen 208 vereinigen sich zu einer Einzelleitung an jeder beliebigen Stelle unten am Rumpf, welche Einzelleitung in Abb. 15A mit 1200 gekennzeichnet ist;diese tritt mittels Paßstücken 1300 und 1310 in einen Durchgang 1320 zur Kammer 1330 im Getriebe 402 ein. Die Kammer 1330 ist zum hohlen Innern der Treibstoffspindel 401 offen. Eine geeignete Dichtung gegen Flüssigkeiten und Drehbewegung findet Verwendung, um einen Treibstoffaustritt aus dem Getriebegehäuse 402 zu verhindern. Der Treibstoff fließt unter Druck von der Treibstoffpumpe durch Leitung 1200 und durch die Treibstoffspindel 401 zu einem abschließenden Endgehäuse 1700, Abb. 1 und 18. Wie in Abb. 18 gezeigt, gelangt Treibstoff ins Innere 1800 des abschließenden Endgehäuses 1700, das mit Austrittsöffnungen 1900 versehen ist. Diese Austrittsöffnungen 1900 haben Verbindungsleitungen 2000 zu den Treibstoffleitungen 914 über ein geeignetes Paßstück 2200. In den Verbindungsleitungen 2000 sind Ventile 2300 angeordnet, die durch die Drossel 1000 am Steuergriff 500 betätigt werden können.

Die Drossel 1000 ist um eine waagerechte Achse 1000' drehbar und über geeignete Gestänge (nicht gezeigt) mit einer Stange 2500 (Abb. 15A) verbunden, die an einen Kniehebel 2510 angeschlossen ist. Der Kniehebel 2510 steht mit einem Hebel 2540 in Verbindung, der an einem Gehäuse 2550 befestigt ist. Ein Ende 2570 einer Stange 2600 ist im



BAD ORIGINAL
BAD ORIGINAL

0150812

Innern des Gehäuses 2550 gesichert. Die Stange 2600 erstreckt sich durch den Boden 403 des Getriebekastens 402 und verläuft vertikal im Innern der Rotorwelle 242 und der Treibstoffspindel 401. Das obere ferne Ende der Stange 2600 ist mit einem Ende eines geeigneten Gestänges 2610 verbunden. Das entgegengesetzte Ende des Gestänges weist eine drehbar daran befestigte Welle 2620 auf. Das entgegengesetzte Ende der Welle 2620 erstreckt sich durch das abschließende Endgehäuse 2700 und ist mit einem Drehgelenk 3000 im Innern des genannten Gehäuses verbunden, wie aus Abb. 18 ersichtlich. Das Drehgelenk 3000 ist drehbar am Ende der Stange 2620 befestigt und damit drehbar. Befestigt an Gelenk 3000ist ein Paar Stangen 3300, die bei 3400 an Ventilspindeln 3500 angeschlossen sind. Die Nadelenden 3600 der Ventilspindeln 3500 erstrecken sich in Ventilsitze 3700. Ein Paar Druckfedern 3800 werden zwischen Gewichten 3900 und den äußeren Enden der Ventilgehäuse 2300 zusammengedrückt. Die Federn bewirken, daß die Nadeln 3600 außerhalb der Sitze in den Ventilöffnungen 3700 bleiben.

Wie verständlich sein wird, bewirkt eine Drehung der Drossel 1000eine Erwiderung der Stange 2500, die auf den Kniehebel 2510 wirkt. Der Kniehebel wirkt als Reaktion auf die Bewegung der Stange 2500 auf das Gehäuse 2550, das seinerseits auf die Stange 2600 wirkt und diese nach oben oder unten bewegt. Das Gestänge 2610 am Ende der Stange 2600 bewirkt eine Drehung der Stange 2620 bei vertikaler Aufwärts- oder Abwärtsbewegung der Stange 2600. Bei Drehung der mit dem Gelenk 3000 verbundenen Stange 2620 entgegen dem Uhrzeigersinn werden Stangen 3300 und Nadeln 3500 vom Ventilsitz 3700 weggezogen und lassen Treibstoff in die Treibstoffleitung 914 anteilmäßig zur Größe der Drehung der Drossel fließen. Eine Feder 4000 ist an der Konsole 3000 bei 4200 und am Ende der Stange 2600 im Innern des abschließenden Endgehäuses 1700 angebracht und dient zum Einstellen des Reglers zwischen 600 und 700 U/min.

Alternativ kann das in Abb. 16 gezeigte Drosselventil im Regler 5000 durch die Drossel 1000 betätigt werden, die über herkömmliche Gestänge zum Aufwärts- und Abwärtsbewegen der Stange 5100 wirkt. Dieser Vorgang wird auf eine Kulisse 5200 übertragen, die ihren Drehpunkt um die Achse 5300 hat. Das entgegengesetzte Ende 5400 der Kulisse 5200 ist an Ventilspindeln 5500 befestigt, die als Drosselventil ohne Regler arbeiten. Ein Spannschloß 5600 ist mit einem Ende an der Nabe 240 und am entgegengesetzten Ende auch an der Kulisse 5200 befestigt. Mittels Verstellen des Spannschlosses 5600 können an den Ventilen dieser Drossel Feineinstellungen vorgenommen werden.

Um dem Hubschrauber eine größere Reichweite zu verleihen, ist ein abnehmbarer und zusammenlegbarer Außenbord-Propellermotor 6000 vorgesehen (siehe Abb. 9, 9A, 10 und 11). Der Motor 6000 ist L-förmig ausgebildet und weist einen horizontalen Schenkel 6100 sowie einen vertikalen Schenkel 6200 auf. An seiner Welle 6400 ist ein Propeller 6300 in herkömmlicher Weise angebracht. Der horizontale Schenkel 6100 enthält einen Benzinmotor, der durch eine Wirbelwand 6500 abgedeckt ist. Motor und Wirbelwand werden an den Beinen 172 und 174 durch Stangen 6600 und 6700 sowie durch Frachthaken 82 getragen. Der Motor 6000 ist an der Verbindungsstelle 6800 mittels eines Gelenks 6900 zusammenlegbar. Die Kraft des Motors wird auf den Propeller durch geeignete Zahnradtriebe und Übersetzungen übertragen. Benzinbehälter 7000 ersetzen die Raketentreibstoffbehälter 204. Ein Raketentreibstoffbehälter 7100 kann am Rumpf 54 durch jedes beliebige geeignete Mittel angebracht werden. Dieser Raketentreibstoffbehälter ist so ausgebildet, daß er um den Rumpf herum paßt und es ermöglicht, den vertikalen Schenkel 6200 einwandfrei vertikal zu verlegen. In Abb. 9A jedoch ist eine abgewandelte Form des vertikalen Schenkels gezeigt. Diese Bauweise gestattet die Beseitigung eines Unterdrucks im Behälter durch die Ausführung des Gelenkes 6800 dergestalt, daß der vertikale Schenkel schräg nach außen vom Behälter 7100 weg verläuft.

Die verschiedenen, oben beschriebenen Merkmale der Erfindung sollen lediglich zu Veranschaulichungszwecken dienen und sind, da die Möglichkeit zahlreicher Abwandlungen und Änderungen für Sachkundige auf diesem Gebiet ohne weiteres auf der Hand liegt. nicht mit der Absicht verbunden, die Erfindung auf eine genau beschriebene Arbeits- oder Bauweise zu begrenzen, so daß dementsprechend auf alle geeigneten Abänderungen und gleichwertige Ausführungen zurückgegriffen werden kann, ohne den Umfang und Geist der Erfindung dadurch zu verlassen.

PATENTANSPRÜCHE

1. Ein Drehflügel-Fluggerät, umfassend:

einen hohlen rohrförmigen Rumpf mit einem Paar sich nach vorn erstreckender paralleler Arme, die an einem oberen Ende des Rumpfes befestigt sind;

einen rechtwinklig zum genannten Rumpf daran durch ein L-förmiges Paßstück befestigten Kiel;

einen an genanntem Rumpf und an genanntem Kiel befestigten Sitz:

eine U-förmige Stange mit am genannten Rumpf befestigten Verlängerungsarmen, mit Ellbogenlehnen an den Enden dieser Verlängerungsarme;

an genannten Verlängerungsarmen abnehmbar angebrachte Treibstoffbehälter;

an einer Welle drehbar unterstützte Hauptrotorblätter;

die genannte Welle, unterstützt an den genannten sich nach vorn erstreckenden parallelen Armen, die am oberen Ende des genannten Rumpfes befestigt sind;

an genannter Welle oberhalb des genannten Paares sich nach vorn erstreckender paralleler Arme unterstützte Mittel zum Verstellen des zyklischen und des gemeinsamen Anstellwinkels der genannten Hauptrotorblätter;

einen vom Flugzeugführer zu betätigenden Steuergriff mit Befestigung an genannten Mitteln, wodurch der Flugzeugführer den zyklischen und den gemeinsamen Anstellwinkel der genannten Hauptrotorblätter verstellen kann;

einen Heckrotor für genanntes Fluggerät, zu betätigen über einen Getriebekasten, der am oberen Ende des genannten Rumpfes angebracht ist;

Mittel mit Verbindungen zum genannten, vom Flugzeugführer zu betätigenden Steuergriff zum Verstellen des gemeinsamen Anstellwinkels des genannten Heckrotors;

Gasstrahlmotoren in den Enden der genannten Rotorblätter;

Treibstoffferdermittel von den Treibstoffbehältern zu den Gasstrahlmotoren durch den Rumpf;

Pumpenmittel zum Betätigen durch die genannten Rotorblätter zum Fördern von Treibstoff von den Treibstoffbehältern zu den Gasstrahlmotoren, und

Ventilmittel in den Treibstoffleitungsmitteln zum Verändern der Treibstoffzufuhr zu den Gasstrahlmotoren, zu betätigen durch den genannten vom Piloten zu betätigenden Steuergriff.

2. Drehflügel-Fluggerät gemäß Anspruch 1, bei dem

der genannte rohrförmige Rumpf hohl ist und zwecks Erhalts unterschiedlicher Längen ausgefahren und eingezogen werden kann.

3. Drehflügel-Fluggerät gemäß Anspruch 1, bei dem

die Enden der Rotorblätter Öffnungen in den Vorder- und Hinterkanten zum Bestreichen der genannten Gasstrahlmotoren mit Luft aufweisen.

4. Drehflügel-Fluggerät gemäß Anspruch 1, bei dem

der genannte Rumpf ein Paar nach vorn oben weisender paralleler Arme aufweist und die genannte Welle in dem genannten Paar paralleler Arme beweglich so befestigt ist, daß sie vor- und zurückgeneigt werden kann.

5. Drehflügel-Fluggerät gemäß Anspruch 1 sowie ein Getriebekasten mit Befestigung an genanntem Rumpf, mit darin eingebauten Mitteln zum Rotieren des genannten Heckrotors und zum Antrieb der Treibstoffpumpen, wobei die genannten Mittel vom Hauptrotor betrieben werden können, und eine handbetätigte Pumpe zum Starten der Rotation des Hauptrotors.

6. Drehflügel-Fluggerät gemäß Anspruch 1, bei dem

die genannten Mittel zum Beeinflussen des zyklischen Anstellwinkels der genannten Rotorblätter umfassen: ein drehbar und kippbar um ein balliges Ende einer Hülse gelagertes Gehäuse, eine um genanntes Gehäuse drehbare Taumelscheibe, Gestängemittel mit Befestigung an der genannten Taumelscheibe und an den genannten Rotorblättern sowie Mittel zum Kippen des genannten Gehäuses um das genannte ballige Ende der genannten Hülse zum Verstellen des genannten Gestänges, das bei Betätigung den zyklischen Anstellwinkel der genannten Rotorblätter in bezug auf ihre Anstellwinkelveränderungsachse verändert und dabei die Neigungsebene der Rotorblätter als Reaktion auf ein Kippen des Gehäuses verändert.

0150812

7. Drehflügel-Fluggerät gemäß Anspruch 1, bei dem der genannte Heckrotor Blätter aufweist, die drehbar gelagert, in radialer Stellung aber durch Blattfedern gehalten werden.

8. Drehflügel-Fluggerät gemäß Anspruch 1, bei dem der genannte Sitz am genannten Kiel über Stoßfängermitteln angebracht ist.

9. Drehflügel-Fluggerät gemäß Anspruch 1, bei dem der genannte Sitz am genannten Rumpf über Stoßdämpfermittel angebracht ist.

10. Drehflügel-Fluggerät gemäß Anspruch 1, bei dem der genannte Sitz kugelsicher ist und vom Piloten zu dessen Sicherheit anzulegende Geschirrmittel aufweist.

11. Drehflügel-Fluggerät gemäß Anspruch 1, bei dem die genannten Gasstrahlmotoren umfassen: ein an einem Einzelblock befestigtes Gehäuse, Katalysatorkammern innerhalb des genannten Gehäuses, wobei diese am genannten Einzelblock befestigt sind, Treibstoffzuleitungsmittel von den genannten Behältern durch die genannten Rotorblätter zu den Katalysatorkammern, und Mittel zum Befestigen der genannten Gasstrahlmotoren im Innern der Rotorblätter.

12. Drehflügel-Fluggerät gemäß Anspruch 1, bei dem

die genannten Mittel zum Verstellen des gemeinsamen Anstellwinkels der genannten Rotorblätter umfassen: ein an genannter Welle bewegliches Gehäuse, eine um genanntes Gehäuse drehbare Taumelscheibe, Gestängemittel mit Anschluß an genannte Taumelscheibe und genannte Rotorblätter sowie Mittel zum vertikalen Bewegen von Gehäuse, Taumelscheibe und Gestängen dafür auf genannter Welle, wobei die genannten Gestänge auf die genannten Rotorblätter zum Vergrößern oder Verkleinern des gemeinsamen Anstellwinkels der genannten Blätter wirken.

13. Drehflügel-Fluggerät gemäß Anspruch 1, bei dem der vom Flugzeugführer zu betätigende Steuergriff nahe seinem oberen Ende um eine seitliche und vertikale Achse drehbar mit einem Jochzusammenbau verbunden ist, dieser Jochzusammenbau nahe seinem rückwärtigen Ende um eine seitliche Achse drehbar mit einem Gehäuse verbunden und an seinem äußersten rückwärtigen Ende an einem Anker befestigt ist, wodurch bei vertikaler Aufwärtsbewegung des genannten Griffes das genannte Gehäuse mit Taumelscheibe und Gestänge vertikal entlang genannter Welle bewegt wird und den gemeinsamen Anstellwinkel der genannten Hauptrotorblätter vergrößert.

14. Drehflügel-Fluggerät gemäß Anspruch 13 und eine Kippstange, an einem Ende um vertikale und seitliche Achsen drehbar mit genanntem oberen Ende des genannten Griffes und am anderen Ende mit dem Gehäuse verbunden, wodurch bei Vorwärts- oder Rückwärtsbewegung des genannten Griffes in bezug auf die Vertikalachse des Rumpfes das Gehäuse um ein balliges Ende einer Hülse schwenkt und auf diese Weise das genannte Gestänge zwischen Taumelscheibe und genannten Rotorblättern in Längsrichtung bewegt und ein zyklisches Verstellen der Anstellwinkels der genannten Hauptrotorblätter bewirkt, wodurch die Neigungsebene der Rotorblätter entgegengesetzt zur Neigungsrichtung des Gehäuses geneigt wird.

15. Drehflügel-Fluggerät gemäß Anspruch 4, bei dem das genannte Paar sich nach vorn oben erstreckender paralleler Arme mit einer Manschette eine feste Einheit bilden und die genannte Manschette abnehmbar am oberen Ende des Rumpfes befestigt ist.

16. Drehflügel-Fluggerät gemäß Anspruch 1, bei dem die genannte Welle hohl ist und die Durchführung einer Treibstoffspindel ermöglicht, wobei die genannte Treibstoffspindel ihr äußerstes unteres Ende in einen unterhalb des genannten Paares paralleler Arme angeordneten Getriebekasten erstreckt und dabei ein Zahnrad an genannter Spindel in der Nähe ihres äußersten unteren Endes mit einem zweiten Zahnrad in Eingriff steht, an dem eine erste Stange mit einer Kupplung an deren Ende befestigt ist und die Kupplung mit einer ähnlichen Kupplung am Ende einer zweiten Stange verbunden ist, deren rückwärtiges Ende in einen Getriebekasten oben am Rumpf mündet, wobei das Ende der genannten zweiten Stange ein Zahnrad trägt, das in ein noch anderes Zahnrad eingreift, das eine Stange aufweist, die sich im Innern des Rumpfes zum Betätigen einer Treibstoffpumpe erstreckt; ein Ende einer dritten Stange ist am Zahnrad am Ende der zweiten Stange

0150812

befestigt, und das Ende der dritten Stange trägt eine Kupplung, die mit einer ähnlichen Kupplung an der Heckrotorantriebsstange verbunden ist, wobei diese letzte Stange sich im Innern des Heckrotorauslegers erstreckt, der mit dem Getriebekasten oben am Rumpf starr verbunden ist, wobei die genannten Zahnradkupplungen und Stangen bei Drehung des Hauptrotors zwecks Antriebs des genannten Heckrotors und der genannten Treibstoffpumpe angetrieben werden.

17. Ein Drehflügel-Fluggerät gemäß Anspruch 6, bei dem das genannte Gehäuse einen konischen Querschnitt und eine Lagerfläche im kleineren Ende des Konus hat, die gegen den oberen Teil des balligen Endes der genannten Hülse anliegt; dabei ist ein kleineres, das genannte Gehäuse ergänzendes Gehäuse innerhalb des genannten Gehäuses drehbar verstellbar und hat eine Lagerfläche, die gegen den unteren Teil des balligen Endes der genannten Hülse anliegt, wobei Kettenradmittel am äußeren Ende des kleineren Gehäuses mit einem Kettenrad am Ende eines Griffes über eine Kette zusammenwirken und der Griff drehbar an der Außenseite des genannten Gehäuses befestigt ist, so daß beim Drehen des Griffes das kleinere Gehäuse in das genannte Gehäuse hinein und daraus herausbewegt wird, wodurch die Lagerfläche des kleineren Gehäuses den Reibschluß mit dem unteren Teil des balligen Endes der genannten Hülse vermindert und damit die Kraft beeinflußt, die zum Neigen des genannten Gehäuses um das ballige Ende der genannten Stange aufgebracht werden muß.

18. Drehflügel-Flugzeug gemäß Anspruch 14, bei dem die genannte Neigung der Hauptrotor-Kippebene je nach Bewegungsrichtung des vom Flugzeugführer zu betätigenden Griffes erfolgt, wodurch bewirkt wird, daß sich das Fluggerät in der Bewegungsrichtung des Griffes bewegt.

19. Drehflügel-Fluggerät gemäß Anspruch 13, bei dem der genannte Anker drehbar an einem horizontalen Schenkel einer L-förmigen Konsole befestigt und diese drehbar am vorderen Ende der genannten nach oben weisenden parallelen Arme angebracht ist, wobei ein Flansch mit einer Gewindeöffnung sich waagerecht zum abwärts geführten Schenkel der genannten L-förmigen Konsole erstreckt und verstellbare Mittel zwischen genanntem Jochzusammenbau und genanntem Flansch angebracht sind, um die Bewegung des Griffes in vertikaler Richtung durch Reibung zu beeinflussen und es somit dem Flugzeugführer zu ermöglichen, die erforderliche Kraft zum vertikalen Bewegen des Griffes unter Beachtung seiner körperlichen Beschaffenheit zu bestimmen.

20. Drehflügel-Fluggerät gemäß Anspruch 12, bei dem die genannten Gestänge gekreuzt sind, wodurch eine Vorwärtsneigung des genannten Gehäuses bewirkt, daß die Gestänge die Kippebene des genannten Hauptrotors rückwärts neigen, so daß das Fluggerät rückwärts fliegt.

21. Drehflügel-Fluggerät gemäß Anspruch 1, bei dem

die genannten Mittel zum Verstellen des Anstellwinkels des genannten Heckrotors umfassen ein biegsames Kabel, an einem Ende befestigt an einer starr mit dem oberen Ende des Steuergriffs verbundenen versetzten Konsole, am entgegengesetzten Ende an einen Kniehebel angeschlossen, dessen anderes Ende am Mechanismus zum Verändern des Heckrotoranstellwinkels so angebracht ist, daß ein Drehen des Steuergriffs um eine vertikale Achse bewirkt, daß das biegsame Kabel am Kniehebel zieht oder drückt und so auf die Anstellwinkelverstellung des Heckrotors wirkt und als Ergebnis davon der Heckrotor die Luft links oder rechts drückt, auf diese Weise also gezwungen ist, das Fluggerät in die gleiche Richtung zu drehen, in der auch der Griff gedreht wird.

22. Drehflügel-Fluggerät gemäß Anspruch 7, bei dem der genannte Heckrotor umfaßt ein Paar am Heckrotorträger über Blattfedern so befestigtes Paar Blätter, daß diese sich an den genannten Blattfedern für den Fall biegen können, daß sie ein Hindernis berühren.

23. Drehflügel-Fluggerät gemäß Anspruch 1, bei dem das genannte Paßstück zwischen genanntem Rumpf und genanntem Kiel die genannten rohrförmigen Verlängerungen daran hat, und zudem ein Paßstück am Vorderende des Kiels mit rohrförmigen Verlängerungen und Hebelsteuermitteln daran zum Tragen eines Fahrgestells mit hinteren und vorderen Tragbeinen, die lösbar in den genannten rohrförmigen Verlängerungen gesichert sind, an genannten Beinen lösbar befestigte Kufen, Konsolmittel an genanntem Kiel zwischen den genannten Paßstücken, eine auslösbare, in genannten Konsolmitteln gleitbare Stange, und genannter Hebel, mit der genannten auslösbaren

0150812

Stange verbunden, die beim Zurückziehen die dadurch gehaltene Fracht freigibt.

24. Drehflügel-Fluggerät gemäß Anspruch 1 sowie ein unter dem genannten Kiel abnehmbar befestigter Druckschraubenmotor, dessen Schrauben- oder Propeller-Tragpylon in der Nähe der Stelle, an der er an der Kurbelwelle des Motors befestigt ist, eingeklappt werden kann, und Treibstoffbehälter für den genannten Druckschraubenmotor wie auch für die genannten Strahl- oder Raketenmotoren.

25. Drehflügel-Fluggerät gemäß Anspruch 24, bei dem der genannte Druckschraubenmotor eine L-förmige Konstruktion darstellt, deren oberes vertikales Ende neben dem Rumpf liegt und einen sich daran erstreckenden Propeller aufweist, wobei sein horizontales Ende unter dem Kiel angebracht und durch Beine des Fluggeräts getragen wird.

26. Drehflügel-Fluggerät gemäß Anspruch 25, bei dem der genannte Druckschraubenmotor von den genannten Beinen und unter dem genannten Kiel abgebaut und an der Verbindungsstelle zwischen vertikalem und horizontalem Bereich davon zusammengelegt werden kann, und ein von der Propellerwelle abnehmbarer Propeller, wodurch eine Einheit geschaffen wird, die sich in kompakter Form lagern läßt.

27. Drehflügel-Fluggerät gemäß Anspruch 26, bei dem der genannte Treibstoffbehälter für die genannten Raketenmotoren am Rumpf abnehmbar befestigt und so ausgebildet ist, daß sich die Seiten des genannten Behälters um den Rumpf und den Propellerpylon herum erstreckt.

0150812

28. Drehflügel-Fluggerät, umfassend:

einen hohlen rohrförmigen Rumpf mit einem Paar sich nach vorn erstreckender paralleler Verlängerungsarme;

einen Kiel, am Rumpf rechtwinklig dazu über ein rohrförmiges Paßstück befestigt, das rohrförmige Verlängerungen zum Tragen eines Fahrgestells aufweist;

an genannter Welle befestigte Hauptrotorblätter;

Strahl- oder Raketenmotoren, untergebracht in den Enden der Rotorblätter;

Mittel zwischen genannten Hauptrotorblättern und genannten Verlängerungsarmen des Rumpfes zum zyklischen und gemeinsamen Verstellen des Anstellwinkels der Rotorblätter;

genannte Mittel mit einem an einem Kardangelenk drehbaren Gehäuse, das auf genannter Welle gleitbar ist, und Kreuzgestänge als Verbindung zwischen genanntem Gehäuse und genannten Rotorblättern;

vom Flugzeugführer zu betätigende Steuermittel zum Drehen des genannten Gehäuses auf genanntem Kardangelenk und zum Verschieben des genannten Gehäuses auf der genannten Welle;

Treibstoffbehälter mit sich durch den Rumpf erstreckenden Treibstoff-Förderleitungen, die an einer Stelle zusammenlaufen und an eine Treibstoffspindel angeschlossen sind, die sich durch die hohle Rotorwelle erstreckt, wobei genannte Treibstoffspindel verbunden ist mit Treibstoff-Förderleitungen, die sich durch die Rotorblätter zu den Strahl- oder Raketenmotoren erstrecken;

0150812

Reglermittel in genannten Treibstoffleitungen und

genannte Steuermittel zum Betätigen durch den Flugzeugführer zum Verstellen des Reglers zwecks Erhöhung oder Verminderung der Treibstoffzufuhr zu den genannten Raketenmotoren, um so die Drehzahl des Hauptrotors zu verändern.

29. Drehflügel-Fluggerät gemäß Anspruch 28, bei dem die genannten Mittel zwischen genannten Hauptrotorblättern und genanntem Rumpf umfassen ein konusförmiges Gehäuse, an seinem kleineren Ende drehbar an einem Kardangelenk, eine um genanntes kleineres Ende drehbare Taumelscheibe und Kreuzgestänge zum Verbinden der genannten Taumelscheibe und der genannten Rotorblätter, wodurch bei der Drehbewegung des genannten Gehäuses um das genannte Kardangelenk die Kreuzgestänge auf die Rotorblätter wirken und eine Neigung der Rotorblätterebene entgegengesetzt zur Drehbewegungsrichtung des genannten Gehäuses hervorrufen.

30. Drehflügel-Fluggerät gemäß Anspruch 28, bei dem genannte Treibstoffspindel an einem Ende durch genannte Hauptrotorblätter angetrieben wird und das entgegengesetzte Ende sich in einen Getriebekasten unter dem Rumpfkopf, dagegen jedoch versetzt, erstreckt, bei dem Zahnradmittel nahe dem unteren Ende der genannten Treibstoffspindel im genannten Getriebekasten mit einem weiteren Zahnradmittel zusammenwirkt, das letztere bestimmt zum Antrieb des Heckrotormittels, das sich vom genannten Rumpf erstreckt, sowie Pumpenmittel zum Fördern des Treibstoffs durch genannte Treibstoffleitungen und Treibstoffspindel zu genannten Raketenmotoren.

31. Drehflügel-Fluggerät gemäß Anspruch 28, bei dem das genannte Steuermittel aus einem einzigen, mit dem Gehäuse verbundenen Griff oder Knüppel besteht, wodurch eine Vorwärts- oder Rückwärtsbewegung des Griffes das Gehäuse in die gleiche Richtung dreht, wodurch die Neigungsebene der Rotorblätter entgegengesetzt zur Bewegungsrichtung des Griffs gebracht und bewirkt wird, daß das Fluggerät je nach Neigung der Ebene der Rotorblätter vorwärts oder rückwärts fliegt.

32. Drehflügel-Fluggerät gemäß Anspruch 31 und:

genannter Griff mit Anschluß zum Gehäuse durch eine Kippstange, deren äußerstes Ende seinen Drehpunkt um einen Anker hat, wodurch bei Aufwärts- oder Abwärtsbewegung des Griffes das Gehäuse sich auf der Welle vertikal bewegt und bewirkt, daß die Kreuzgestänge auf die Rotorblätter zum Vergrößern oder Verkleinern ihres Anstellwinkels einwirken und es somit dem Flugzeug ermöglichen, je nach Aufwärts- oder Abwärtsbewegung des genannten Griffes zu steigen oder zu sinken.

33. Drehflügel-Fluggerät gemäß Anspruch 31 und:

genannter Handgriff in drehbarer Anordnung um eine vertikale Achse, Konsolmittel mit Befestigung am oberen Ende des genannten Griffes, jedoch dagegen versetzt, biegsame Kabelmittel mit Befestigung an der genannten versetzten Konsole an einem Ende und am Heckrotor am andern, drehbare Mittel zur Verbindung des Heckrotors und des genannten biegsamen Kabels, wodurch beim Drehen des genannten Griffes um genannte vertikale Achse das biegsame Kabel auf den Heckrotor durch Verbindung mit dem Drehmittel einwirkt, um den Anstellwinkel des Heckrotors zu verändern, wodurch der Heckrotor so auf die Luft winwirkt, daß er und sein Ausleger das Flugzeug um seine Vertikalachse drehen.

34. Drehflügel-Fluggerät gemäß Anspruch 31 und:

genannter Griff hat daran angebrachte Drosselsteuermittel, die über geeignete Gestänge eine Stange hin und her bewegen, die an einen Schenkel eines Kniehebels angeschlossen ist, an dessen entgegengesetztem Ende eine zweite Stange angebracht ist, die sich durch die genannte Treibstoffspindel und die genannte Hohlwelle erstreckt und deren oberes Ende an genannten Regler durch ein Gestänge angeschlossen ist, das Linearbewegung in Drehbewegung umwandelt, wodurch beim Drehen der genannten Drossel durch eine horizontale Achse der Regler verstellt wird und durch Verstellen von Ventilen dafür sorgt, daß die Treibstoffzufuhr zu den Raketenmotoren verändert wird.

1/11 0150812

243
244
1700
340
240
138
54
52
162
160
120
114
500
1100
1000
1000'
50
444
447
472
470
440
471
445


Fig. 1

Fig. 2

Fig. 5

Fig. 4

70'
68'
64'

Fig. 8

50
200
201
201
202
202
204
204
206
208
210
444
456
440
454
452
450
458
460

Fig. 3

Fig. 6

178
196
198
176
64
176
192
194
174
172
170
180
184
190
188
171
174
172

Fig. 7

202
120
204
64'
64'
174
192
172

23
24
950
940
930
906
904
912
909
916
914
920
900
942
910
908
902
932
890
922
23
962
24

Fig. 21

950
902
960
962
908
909

Fig. 22

Fig. 23

960
922
962

Fig. 16
5500
5400
5200
914
5300
5600
5100
240
Fig. 17
5400
914
Fig. 18
2310
3900
3800
3600
3700
3400
4200
1700
1800
1900
2620
3000
4000
2000
3300
3500
2300
2200
914
3400
3800
2310
3600
3700
Fig. 19
2000
1700
914
242
2600
2900
2510

Fig. 15B

B
416
431
414
420
422
434
436
430
438
439
424
418
B
426
54

2620
2610
2600
401
400
404
406
408
410
412
414
402
1830
403
1820
1810
1300
1200
2600
2570
2550
2530
2540
2520
2510
2800

Fig. 15A

262
264
257
260
256
270
252
254
278
280
282
267
286
284
272
276
275
274
290
292
930
914
Fig. 14
Fig. 20

Fig. 12
Fig. 13

Fig. 11

6400
6200
6500
6000
6100

Fig. 9

7100
6400
7000
6300
6200
6800
6800
174
6500
6100
6000
172

Fig. 9A

7100
6200
6800

Fig. 10

6700
6700
172
6600
6600